(19) **Europäisches Patentamt**
**European Patent Office**
**Office européen des brevets**

(11) **EP 2 629 135 B1**

(12) **EUROPEAN PATENT SPECIFICATION**

(45) Date of publication and mention
of the grant of the patent:
**18.03.2015 Bulletin 2015/12**

(51) Int Cl.:
*G02B 27/22* (2006.01)     *G02F 1/13* (2006.01)
*G02F 1/1347* (2006.01)    *H04N 13/04* (2006.01)
*G02F 1/1333* (2006.01)    *G02F 1/1343* (2006.01)

(21) Application number: **11832471.4**

(22) Date of filing: **06.10.2011**

(86) International application number:
**PCT/JP2011/073049**

(87) International publication number:
**WO 2012/050036 (19.04.2012 Gazette 2012/16)**

(54) **DISPLAY DEVICE**

ANZEIGEVORRICHTUNG

DISPOSITIF D'AFFICHAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2010 JP 2010230909**

(43) Date of publication of application:
**21.08.2013 Bulletin 2013/34**

(73) Proprietor: **Sharp Kabushiki Kaisha
Osaka-shi, Osaka 545-8522 (JP)**

(72) Inventors:
• **MURAO Takehiro
Osaka 545-8522 (JP)**

• **FUKUSHIMA Hiroshi
Osaka 545-8522 (JP)**
• **YOSHINO Takuto
Osaka 545-8522 (JP)**
• **TAKATANI Tomoo
Osaka 545-8522 (JP)**

(74) Representative: **Müller Hoffmann & Partner
Patentanwälte
St.-Martin-Strasse 58
81541 München (DE)**

(56) References cited:
**JP-A- 8 331 605       JP-A- 2007 079 265
JP-A- 2009 069 458    JP-A- 2010 169 911
JP-A- 2010 175 890    KR-A- 20080 003 087**

**Description**

TECHNICAL FIELD

The present invention relates to a display device.

BACKGROUND ART

An electronic device such as a mobile terminal device, a computer, and a television device includes a display device having a display panel such as a liquid crystal panel. Examples of the mobile terminal device include a mobile phone, a smart phone, and PDA. In such a device, a "parallax barrier system" may be employed to display a stereoscopic image. The parallax barrier system utilizes the characteristics of human eye to perceive the stereoscopic image based on a binocular parallax, which is difference in a perception of an object by left and right eyes. For example, Patent Document 1 below discloses a display device including a function to display the stereoscopic image.

RELATED ART DOCUMENT

Patent Documents

Patent Document 1:

    Publication No. 2009-139947 JP 2009 139947 A;
    Patent Document 2: Publication JP 8 331 605 A.

Problem to be Solved by the Invention

The display device disclosed in Patent Document 1 includes a parallax barrier such as switching liquid crystals. The parallax barrier is arranged to face a display panel such as a liquid crystal panel. The display panel includes pixels for right eye and pixels for left eye. The parallax barrier includes barrier sections and barrier openings that are provided such that the pixels for right eye and the pixels for left eye are seen at a specific viewing angle. This generates a binocular parallax effect and enables the viewer to see the stereoscopic image.

Such a display device may have following problems depending on a position of the viewer with respect to the display device. If the display device is seen from a non-optimum viewing position, which is away from an optimum viewing position, a section ratio among an R sub-pixel, a G sub-pixel, and a B sub-pixel included in each pixel seen through the barrier openings is unbalanced. This may cause "coloring" in which the original color tones are lost. In addition, if the display device is seen from the non-optimum viewing position, the pixels for right eye may be perceived by the left eye, or the pixels for left eye may be perceived by the right eye. This is referred to as "crosstalk". Further, the barrier sections provided by the parallax barrier limit the amount of light for displaying. This reduces brightness of the image. The problems have not been sufficiently studied yet.

DISCLOSURE OF THE PRESENT INVENTION

The present invention was made in view of the above circumstances. An object of the present invention is to provide a display device in which coloring and crosstalk hardly occur and high brightness is obtained.

Means for Solving the Problem

A display device according to the present invention includes a display panel and a parallax barrier. The display panel includes a plurality of pixels and light blocking sections. The pixels are arranged linearly in at least one direction. The light blocking sections are each arranged between adjacent two of the pixels and configured to block light. The parallax barrier faces the display panel and is configured to separate an image displayed on the pixels by parallax. The parallax barrier includes barrier sections and barrier openings. The barrier sections are arranged in an arrangement direction in which the pixels are arranged and configured to block light. The barrier openings are each arranged between adjacent two of the barrier sections and configured to allow the light to pass therethrough. Each of the barrier sections has a dimension measured in the arrangement direction that satisfies Expression (1) below in which Wb ($\mu$m) is the dimension of each of the barrier sections, A ($\mu$m) is a dimension of each of the pixels measured in the arrangement

direction, and B ($\mu$m) is a dimension of each of the light blocking sections measured in the arrangement direction.

[Mathematical expression 1]

$$A - 6 \leq Wb \leq A + B / 2 \qquad (1)$$

In this configuration, the parallax barrier facing the display panel includes the barrier section arranged in the arrangement direction of the pixels and the barrier openings arranged between adjacent two of the barrier sections. Accordingly, the image displayed on the pixels is seen at a specific viewing angle through the barrier openings arranged between the barrier sections. This enables the image displayed on the pixels to be separated by parallax, and thus the viewer can see a stereoscopic image (a 3D image, a three-dimensional image).

In the conventional display devices, if a viewer sees the display panel from a non-optimum viewing position, "coloring" may occur in which an original color tone of the pixels seen through the barrier opening is lost. In addition, if the viewer sees the display from the non-optimum viewing position, "crosstalk" may occur in which the separation of the image by parallax is insufficient. In addition, the amount of light for displaying may be limited by the barrier sections, and thus the brightness of the image may decrease.

According to the study conducted by the present inventors, the separation of the image by parallax is improved with increase in the dimension Wb of the barrier section measured in the arrangement direction, and thus the crosstalk hardly occurs. However, the area of the barrier opening through which the light passes decreases with increase in the area of the barrier section that blocks the light, and thus the brightness decreases. On the other hand, the area of the barrier section that blocks the light decreases with decrease in Wb, and thus the area of the barrier opening through which the light passes increases. This increases the brightness, but the image cannot be properly separated by parallax, and thus the crosstalk may easily occur. According to the further study conducted by the present inventors, the pixels are seen in the original color tone through the barrier opening when Wb is within a predetermined range. That is, according to the study, the coloring hardly occurs when Wb is within the predetermined range, but the coloring may easily occur when Wb is larger or smaller than the predetermined range.

The inventors of the present invention have conducted further intensive study and found that, by setting the dimension Wb of the barrier section in the arrangement direction within the range in Expression (1) above, the image can be sufficiently separated by parallax, the sufficient amount of light can pass through the barrier opening, and the pixel can be seen in the original color tone. Accordingly, the crosstalk hardly occurs and high brightness is obtained, and further the coloring is less likely to occur.

The following configuration may be preferable as embodiments of the present invention.

(1) Each of the barrier sections may have Wb that satisfies Expression (2) below. The problem of crosstalk is less likely to occur depending on images displayed on the pixels. However, the problems of the coloring and the brightness are fundamental problems that may occur in any image displayed on the pixels. The dimension Wb set within the above range can reduce the coloring and provide higher brightness.

[Mathematical expression 2]

$$Wb \leq A \qquad (2)$$

(2) Each of the barrier sections may have Wb that satisfies Expression (3) below. With this configuration, the coloring is further less likely to occur.

[Mathematical expression 3]

$$Wb = A - 2 \qquad (3)$$

(3) Each of the barrier section may have Wb that satisfies Expression (4) below. With this configuration, the brightness can be highest within the range in Expression (1) above.

[Mathematical expression 4]

$$Wb \ = \ A \ - \ 6 \qquad (4)$$

(4) Each of the barrier section may have Wb that satisfies Expression (5) below. In this configuration in which the barrier section has the same dimension as the pixel, the coloring and the crosstalk are less likely to occur and the high brightness can be obtained.
[Mathematical expression 5]

$$Wb \ = \ A \qquad (5)$$

(5) Each of the barrier sections may have Wb that satisfies Expression (6) below. With this configuration, the crosstalk is least likely to occur within the range in Expression (1) above.
[Mathematical expression 6]

$$Wb \ = \ A \ + \ 2 \ / \ B \qquad (6)$$

(6) Each of the barrier openings may have a dimension Wo ($\mu$m) measured in the arrangement direction. The dimension of each of the barrier sections and the dimension of each of the barrier openings may satisfy Expression (7) below, in which Wo ($\mu$m) is the dimension of each of the barrier openings and K is a constant. According to the expression, the dimension Wo of each barrier opening in the arrangement direction is obtained by subtracting the dimension Wb of the barrier section from the constant K. Thus, Wo always decreases with increase in Wb. On the contrary, Wo always increases with decrease in Wb. Such a correlation between the barrier section and the barrier opening makes the problem of crosstalk and the problem of brightness inconsistent. However, Wb set within the range satisfying Expression (1) can reduce the crosstalk and can also provide the high brightness.
[Mathematical expression 7]

$$K \ = \ Wb \ + \ Wo \qquad (7)$$

(7) The dimension of each of the barrier sections and the dimension of each of the barrier openings may satisfy Expression (8) below. In this configuration in which the sum of Wb of the barrier section and Wo of the barrier opening is equal to twice the sum of the dimension A of the pixel and the dimension B of the light blocking section, the coloring and the crosstalk are less likely to occur and high brightness can be obtained.
[Mathematical expression 8]

$$Wb \ + \ Wo \ = \ 2A \ + \ 2B \qquad (8)$$

(8) Each of the pixels may include sub pixels arranged in the arrangement direction. The light blocking sections each may be arranged between adjacent two of the sub pixels. Each of the pixels may have the dimension A that satisfies Expression (9) below, in which As ($\mu$m) is a dimension of each of the sub pixels measured in the arrangement direction, n is a number of the sub pixels included in each of the pixels (a positive integer of two or more), and B is the dimension of each of the light blocking sections arranged between the sub pixels. With this configuration, the crosstalk and the coloring are less likely to occur in the display panel including the pixels each including the sub pixels and high brightness can be obtained.
[Mathematical expression]

$$A \ = \ n \ \cdot \ As \ + \ (n-1)B \qquad (9)$$

(9) The parallax barrier may include two substrates facing each other and liquid crystals sealed between the substrates. In this configuration, the parallax barrier is the liquid crystal display panel. Accordingly, the production cost can be reduced, for example.

(10) The display device may further include transparent electrodes arranged in the arrangement direction on at least one of the substrates. The transparent electrodes each may have a strip-like shape. A light transmission of the liquid crystals may be controlled by a voltage applied to the transparent electrodes, thereby selectively providing the barrier section in the parallax barrier. In this configuration, for example, if the liquid crystals are controlled to have a maximum light transmission over the entire area thereof, the parallax barrier does not include the barrier section, and thus the image displayed on the pixels does not have the parallax. The barrier section can be selectively provided by the voltage applied to each of the transparent electrodes. Accordingly, this allows the viewer to selectively see the stereoscopic image (the 3D image, the three-dimensional image) and a flat image (a 2D image, a two-dimensional image). The stereoscopic image and the flat image can be switched.

(11) The pixels may be arranged in the display panel in a matrix. The transparent electrodes may be arranged on each of the substrates included in the parallax barrier. The transparent electrodes on one of the substrates and the transparent electrodes on the other one of the substrates may be arranged perpendicular to each other. The barrier section may have the dimension Wb that is obtained by at least adding a width of one of the transparent electrodes and a space between adjacent two of the transparent electrodes. With this configuration, the viewer can see the stereoscopic image regardless of the orientation of the display panel, i.e., the portrait orientation or the landscape orientation. In this configuration, the barrier section has the dimension Wb that includes the width of the space between the transparent electrodes as above. Accordingly, even if the desired potential difference is not obtained in the area between the adjacent transparent electrodes and the light transmission of the liquid crystal is not properly controlled, which leads the expansion of the barrier section, the crosstalk and the coloring are less likely to occur and high brightness can be obtained.

(12) The parallax barrier may include at least one disclination area overlapping with an end portion of at least one of the transparent electrodes. The disclination area allows a disclination to occur in the liquid crystals. Each of the barrier section may have the width Wb obtained by adding the width of one of the transparent electrodes, the space between the transparent electrodes, and a width of the disclination area. In this configuration, the width of the barrier section may include the width of the disclination area in addition to the width of the space between the transparent electrodes as above. Accordingly, even if the alignment of the liquid crystals is disordered in the disclination area and the desired potential difference is not obtained, which leads improper control of the light transmission and expands the barrier section, the crosstalk and the coloring are less likely to occur and high brightness can be obtained.

(13) The parallax barrier may be arranged on a display surface side of the display panel. With this configuration, if the parallax barrier is configured to have a touch panel function, the viewer can directly touch the touch panel on the display surface side. This improves functionality of the display panel.

(14) The display panel may include two substrates facing each other and liquid crystals sealed between the substrates. In this configuration, the display panel is the liquid crystal panel. Accordingly, the production cost can be reduced, for example.

(15) The display device may further includes a lighting device configured to supply light to the display panel. The lighting device may be arranged to face a surface opposite to a display surface of the display panel. With this configuration, an image can be displayed on the pixels of the display panel by the light supplied from the lighting device. This can increase the brightness of the displayed image.

Advantageous Effect of the Invention

According to the present invention, the coloring and the crosstalk hardly occur, and the high brightness can be obtained.

BRIEF DESCRIPTION OF THE DRAWINGS

FIG. 1 is a cross-sectional view illustrating a general configuration of a liquid crystal display device according to a first embodiment of the present invention;
FIG. 2 is a plan view of the liquid crystal display device;
FIG. 3 is a cross-sectional view of a liquid crystal panel and a parallax barrier;
FIG. 4 is a plan view illustrating an arrangement of color sections on a CF substrate included in the liquid crystal panel;
FIG. 5 is a plan view illustrating an arrangement of transparent electrodes (first electrodes and second electrodes) on a first substrate included in the parallax barrier;

FIG. 6 is a plan view illustrating an arrangement of transparent electrodes (third electrodes and fourth electrodes) on a second substrate included in the parallax barrier;

FIG. 7 is a time chart schematically illustrating a signal of each of the electrodes in the liquid crystal display device that displays the stereoscopic image when placed in the portrait orientation and the landscape orientation;

FIG. 8 is a plan view illustrating a planar arrangement of the transparent electrodes (the transparent electrodes on the second substrate), the barrier section, and the barrier opening in the first substrate included in the parallax barrier;

FIG. 9 is a plan view illustrating an arrangement of the color sections, the barrier sections, and the barrier openings in the CF substrate included in the liquid crystal panel placed in a portrait orientation;

FIG. 10 is a plan view illustrating an arrangement of the color sections, the barrier sections, and the barrier openings in the CF substrate included in the liquid crystal panel placed in a landscape orientation;

FIG. 11 is an explanatory view schematically illustrating a relationship among eyes of a viewer, the barrier sections and the barrier openings of the parallax barrier, and the pixels for right eye and left eye;

FIG. 12 is a graph for explaining a measuring method of a XT value in a comparative experiment, the XT value relating to crosstalk;

FIG. 13 is a graph for explaining a measuring method of a CA value in the comparative experiment, the CA value relating to coloring;

FIG. 14 is a table indicating a relationship between the CA value and the display quality;

FIG. 15 is a graph indicating a relationship between the CA value and the XT value in the comparative experiment, the width of the barrier section being varied;

FIG. 16 is a cross-sectional view of the liquid crystal panel and the parallax barrier according to a second embodiment of the present invention;

FIG. 17 is a schematic view illustrating a relationship among eyes of a viewer, pixels for right eye and left eye of the liquid crystal panel, and a barrier section and a barrier opening of a parallax barrier;

FIG. 18 is a plan view illustrating a third embodiment of the present invention, a width of the barrier section including a space between the transparent electrodes and a disclination area;

FIG. 19 is a plan view illustrating a first electrode on a first substrate included in the parallax barrier according to the other embodiment (19) of the present invention; and

FIG. 20 is a plan view illustrating a counter electrode on a second substrate included in the parallax barrier.

## MODE FOR CARRYING OUT THE INVENTION

<First embodiment>

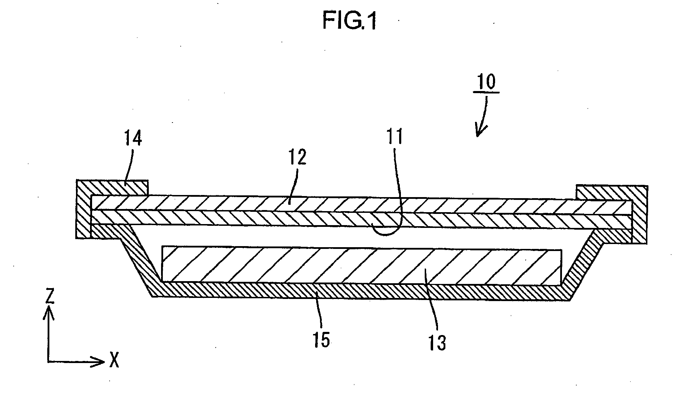

A first embodiment of the present invention will be described with reference to FIG. 1 to FIG. 15. In this embodiment, a liquid crystal display device 10 (a display device) is described. An X-axis, a Y-axis, and a Z-axis are described in some of the drawings, and a direction of each axis corresponds to the direction described in each drawing. An upper and lower direction is described based on FIG. 1. In addition, the upper side in FIG. 1 corresponds to a front side, and the lower side therein corresponds to a rear side.

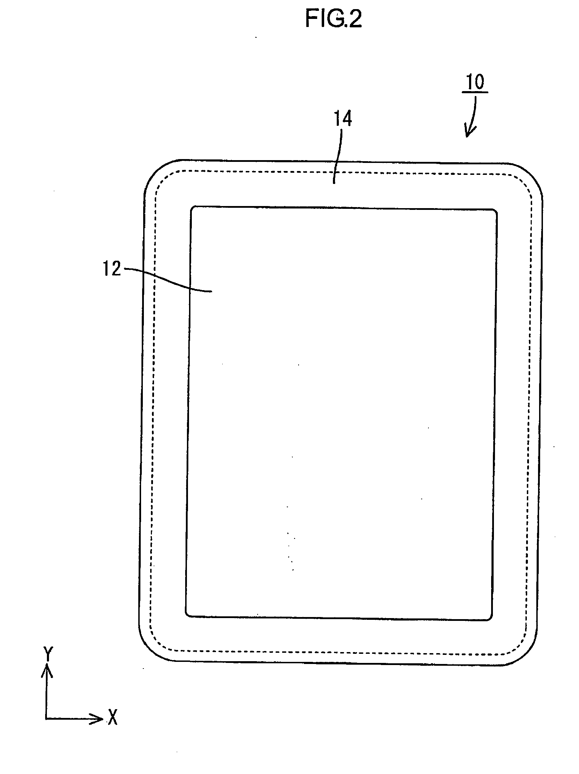

A configuration of the liquid crystal display device 10 is described. As illustrated in FIG. 1 and FIG. 2, the liquid crystal display device 10 has a rectangular shape as a whole. The liquid crystal display device 10 may be placed in a portrait orientation (in a vertical position) or a landscape orientation (in a horizontal position). The liquid crystal display device 10 includes a liquid crystal panel 11 (a display panel), a parallax barrier 12, and a backlight unit 13 (a lighting device). The liquid crystal panel 11 is configured to display an image. The parallax barrier 12 is configured to allow a viewer to see the image on a display surface of the liquid crystal panel 11 as a stereoscopic image (a 3D image, a three-dimensional image). The backlight unit 13 is an external light source configured to emit light to the liquid crystal panel 11 and the parallax barrier 12. The parallax barrier 12 is arranged on a front side (a display surface side, a light exiting side) of the liquid crystal display device 11. The parallax barrier 12 and the liquid crystal display device 11 are bonded together with an adhesive layer GL provided therebetween. The liquid crystal display device 10 further includes a bezel 14 and a housing 15. The bezel 14 holds the liquid crystal panel 11 and the parallax barrier 12. The housing 15 houses the liquid crystal panel 11 and the backlight unit 12. The bezel 14 is attached to the housing 15. The liquid crystal display device 10 according to the present embodiment is used in various electronic devices (not illustrated) such as a handheld terminal (including an e-book and PDA), a mobile phone (including a smart phone), a laptop computer, a digital photo frame, and a handheld gaming device. Accordingly, the liquid crystal panel 11 included in the liquid crystal display device 10 has a display size within a range of a few inch to about 10 inch, for example, 3.4 inch. That is, the liquid crystal panel 11 has a compact size or a small-medium size.

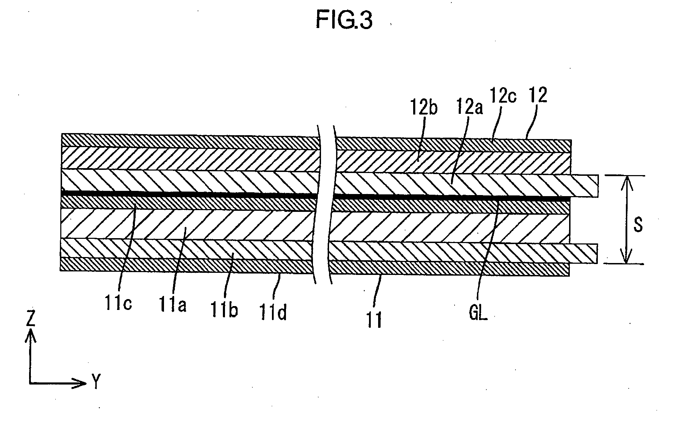

Next, the liquid crystal panel 11 is described. As illustrated in FIG. 2 and FIG. 3, the liquid crystal panel 11 includes a pair of transparent rectangular glass substrates 11a, 11b (capable of light transmission) and a liquid crystal layer (not illustrated) provided therebetween. The liquid crystal layer includes liquid crystals having optical characteristics that vary according to electric fields applied thereto. The substrates 11a, 11b are bonded together with sealant, which is not illustrated, with a space corresponding to the thickness of the liquid crystal layer therebetween. When the liquid crystal display device 10 is placed in a portrait orientation, a long-side direction (a Y-axis direction) of the liquid crystal display 11 matches a vertical direction (the upper and lower direction) and a short-side direction (an X-axis direction) thereof matches a horizontal direction (a right-left direction, a direction along eyes LE, RE). When the liquid crystal display device 10 is placed in a landscape orientation, a long-side direction of the liquid crystal display 11 matches the horizontal direction and a short-side direction thereof matches the vertical direction. Polarizing plates 11a, 11b are each attached to an outer surface side of each of the substrates 11a, 11b.

One of the substrates 11a, 11b that is on the front side is a CF substrate 11a and the other one that is on the rear side is an array substrate 11b. On an inner surface side (a liquid crystal layer side, a side facing the CF substrate 11a) of the array substrate 11b, TFTs (Thin Film Transistor) as switching components and pixel electrodes are arranged in a matrix. Around the TFTs and the pixel electrodes, source lines and gate lines are arranged perpendicular to each other. To the lines, a predetermined image signal is supplied from a control circuit, which is not illustrated. The pixel electrodes include transparent electrodes such as ITO (Indium Tin Oxide) or ZnO (Zinc Oxide).

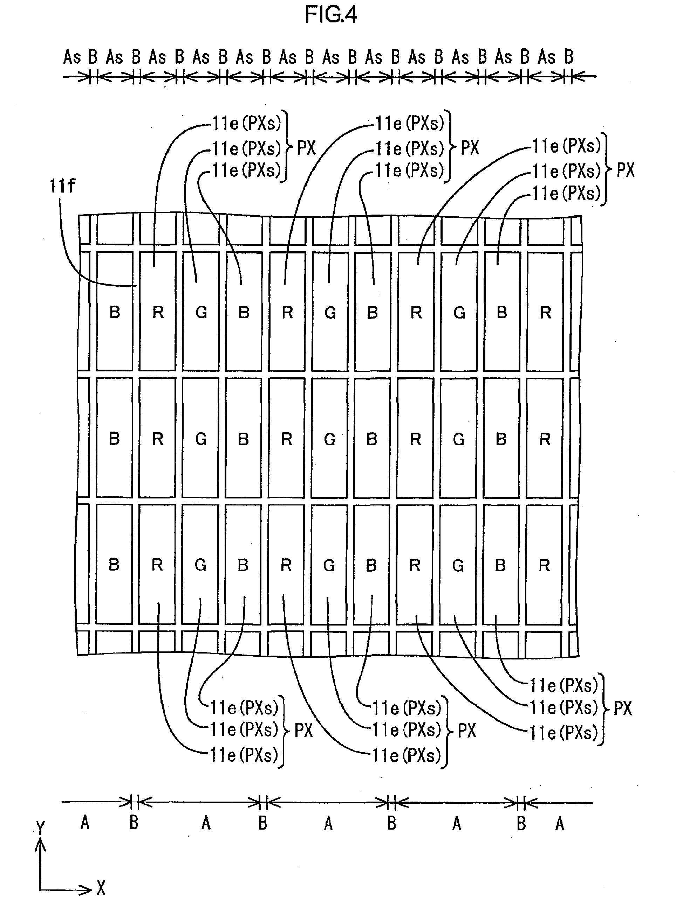

As illustrated in FIG. 4, on an inner surface side (a liquid crystal layer side, a side facing the array substrate 11b) of the CF substrate 11a, color filters are arranged at positions overlapping with the pixel electrodes on the array substrate 11b in a plan view. The color filters each include red (R), green (G), and blue (B) color sections. The color sections 11e are alternately arranged in the X-axis direction. Each of the color sections 11e has a rectangular shape in a plan view. A long-side direction and a short-side direction of the color section 11e match the long-side direction and the short-side direction of the substrate 11a, 11b, respectively. The color sections 11e are arranged in the X-axis direction and the Y-axis direction in a matrix. Between the color sections 11e included in the color filter, a grid-like light blocking section (a black matrix) 11f is provided. The light blocking section 11f prevents color mixing. The light blocking section 11f is arranged to overlap with the gate lines and the source lines on the array substrate 11b. In the liquid crystal panel 11, the R, G, B color sections 11e and three pixel electrodes corresponding thereto configure one pixel PX. Each of the color sections 11e and each of the pixel electrodes corresponding thereto configure one sub pixel PXs. The sub pixels PXs included in one pixel PX are arranged in the X-axis direction. The pixels PX are arranged in a matrix along the display surface (the X-axis direction and the Y-axis direction). On front surfaces of the color sections 11e and the light blocking sections 11f, counter electrodes are provided to face the pixel electrodes on the array substrate 11b. The CF substrate 11a is slightly larger than the array substrate 11b. An alignment film is provided on the inner surface side of each of the substrates 11a, 11b to align the liquid crystal molecules.

The pixels PX included in the liquid crystal panel 11 of the present embodiment, the sub pixels PX, and the light blocking sections 11f arranged between the sub pixels PXs have a relationship indicated by Expression (9) below. In Expression (9), A is a width of each of the pixels PX, i.e., a dimension measured in the X-axis direction, As is a width of each of the sub pixels PXs, B is a width of each of the light blocking sections 11f, "n" is the number of sub pixels PXs included in the pixels PX. In the present embodiment, the width A of the pixel PX is equal to "3As+2B". The widths A, As, and B are all expressed in terms of "$\mu$m".

[Mathematical expression 10]

$$A = n \cdot As + (n-1)B \qquad (9)$$

The backlight unit 13 is briefly described, and then the parallax barrier 12 is described. The backlight unit 13 is an edge-light type (a side-light type) backlight unit. The backlight unit 13 includes light sources, a box-like chassis, and a light guiding member, and an optical member. The light sources are arranged to face ends of the light guiding member. The chassis has an opening on the front side (the liquid crystal panel 11 side, the light exiting side) and houses the light sources. The light guiding member is configured to guide light from the light sources to the opening of the chassis. The optical member is arranged to cover the opening of the chassis. The light from the light sources enters the ends of the light guiding member and guided to the opening of the chassis through the light guiding member. Then, the optical member converts the light into a planar light having an even brightness distribution and the light is applied to the liquid crystal panel 11. An amount of light passing through the liquid crystal panel 11 is selectively controlled in the display surface by the driving of TFTs included in the liquid crystal panel 11, and thus a predetermined image is displayed on the display surface. The light sources, the chassis, the light guiding member, and the optical member are not illustrated in detail.

Next, the parallax barrier 12 is described in detail. As illustrated in FIG. 2 and FIG. 3, the parallax barrier 12 includes a pair of transparent glass substrates 12a, 12b (capable of light transmission) and a liquid crystal layer (not illustrated) provided between the substrates 12a, 12b. The liquid crystal layer includes liquid crystals having optical characteristics that vary according to electric fields applied thereto. The substrates 12a, 12b are bonded together with a sealant, which is not illustrated, with a space corresponding to a thickness of the liquid crystal layer. That is, the liquid crystal panel is provided. The parallax barrier 12 has a size substantially same as that of the liquid crystal panel 11. The parallax barrier 12 and the liquid crystal panel 11 are arranged parallel to each other and bonded together with an adhesive layer GL. When the liquid crystal display device 10 is placed in the portrait orientation, a long-side direction (the Y-axis direction) of the parallax barrier 12 matches the vertical direction (the upper and lower direction) and a short-side direction (the X-axis direction) thereof matches the horizontal direction (the right-left direction, the direction along eyes LE, RE). When the liquid crystal display device 10 is placed in the landscape orientation, the long-side direction of the parallax barrier 12 matches the horizontal direction and the short-side direction thereof matches the vertical direction. A polarizing plate 12c is attached to an outer surface side of the first substrate 12a that is located on the front side. The parallax barrier 12 provides a barrier section BA, which will be described in detail later, by the control of an alignment of the liquid crystal molecules and the light transmission depending on the voltage applied to the liquid crystal layer. The barrier section BA separates the image on the pixels PX of the liquid crystal panel 11 by parallax, and thus the viewer can see the stereoscopic image. In other words, the parallax barrier 12 is a switching liquid crystal panel that can switch between a flat display (the 2D image, the two-dimensional image) and a stereoscopic image (the 3D image, the three-dimensional image) by active control of the light transmission of the liquid crystal layer.

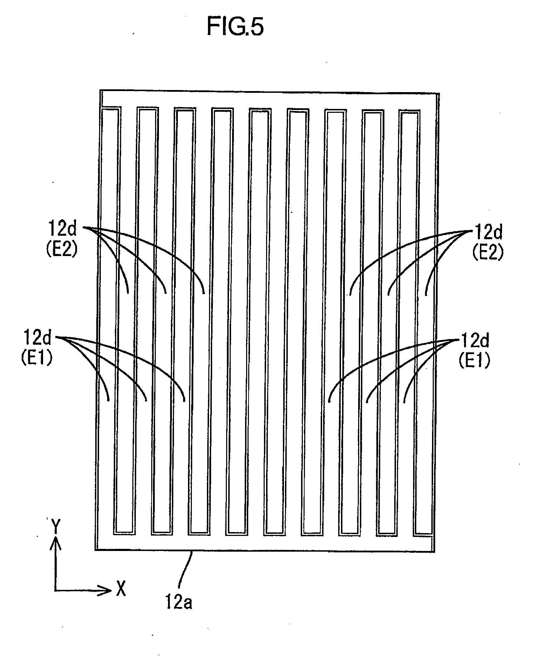

As illustrated in FIG. 5, on an inner surface side (the liquid crystal layer side, the side facing the second substrate 12b) of the first substrate 12a included in the parallax barrier 12, transparent electrodes 12d are arranged. Each transparent electrode 12d has a strip-like shape (a belt-like shape) elongated in the long-side direction (the Y-axis direction) of the first substrate 12a with a substantially constant width. The transparent electrodes 12d are arranged in the short-side direction (the X-axis direction) of the first substrate 12a at regular intervals. The transparent electrodes 12d and the pixels PX of the liquid crystal panel 11 arranged in the X-axis direction are the same in number. The width direction (the arrangement direction) of each transparent electrode 12d corresponds to an arrangement direction of the sub pixels PXs (the X-axis direction) in which three sub pixels PXs included in the pixel PX are arranged. The transparent electrodes 12d are each elongated in a direction perpendicular to the arrangement direction of three sub pixels PXs of the pixel PX included in the liquid crystal panel 11 (the Y-axis direction). The transparent electrodes 12d are divided into two groups. The transparent electrodes 12d in one of the groups configure a first electrode E1 and the transparent electrodes 12d in the other one of the groups configure a second electrode E2. The electrodes 12d in the first and second electrodes E1, E2 are alternately arranged. Specifically, odd transparent electrodes 12d of the transparent electrodes 12d arranged in the X-axis direction are connected to each other at its end and configure the first electrode E1 having a comb-like shape, and even transparent electrodes 12d are connected to each other at its end on the side opposite to the connected side of the odd transparent electrodes 12d and configure the second electrode E2 having a comb-like shape engaging with the first electrode E1.

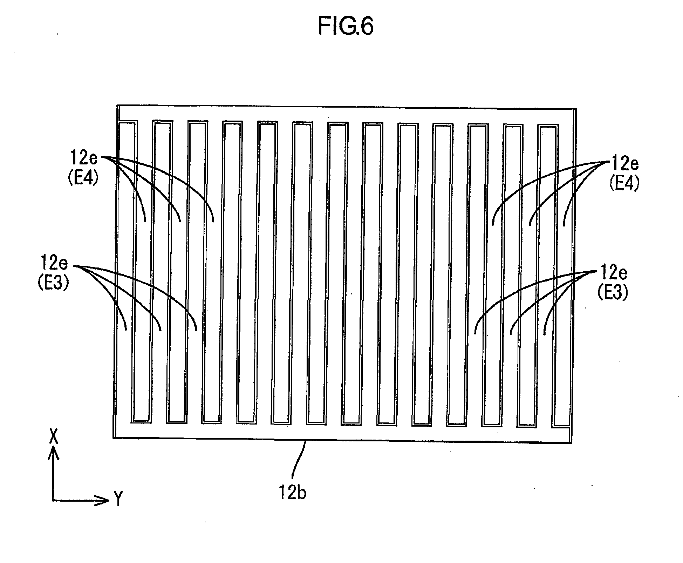

On an inner surface side (the liquid crystal layer side, the side facing the first substrate 12a) of the second substrate 12b, transparent electrodes 12e are arranged. As illustrated in FIG. 6, each transparent electrode 12e has a strip-like shape (a belt-like shape) elongated in the short-side direction (the X-axis direction) of the second substrate 12b with a substantially constant width. The transparent electrodes 12e are arranged in the long-side direction (the Y-axis direction) of the second substrate 12b at regular intervals. That is, the elongated direction and the arrangement direction of the transparent electrodes 12e on the second substrate 12b are perpendicular to the elongated direction and the arrangement direction of the transparent electrodes 12d on the first substrate 12a (see FIG. 5). The elongated direction of the transparent electrodes 12e provided on the second substrate 12b corresponds to the arrangement direction (the X-axis direction) of three sub pixels PXs of each pixel PX included in the liquid crystal display panel 11. The width direction (the arrangement direction) of each transparent electrode 12e corresponds to a direction (the Y-axis direction) perpendicular to the arrangement direction of the sub pixels PXs included in the pixel PX. The transparent electrodes 12e and the pixels PX of the liquid crystal panel 11 arranged in the Y-axis direction are the same in number. The transparent electrodes 12e on the second substrate 12b are divided into two groups. The transparent electrodes 12e in one of the groups configure a third electrode E3 and the transparent electrodes 12e in the other one of the groups configure a fourth electrode E4. The electrodes in the third and fourth electrodes E3, E4 are alternately arranged. Specifically, odd transparent electrodes 12e of the transparent electrodes 12e arranged in the Y-axis direction are connected to each other at its end and configure the third electrode E3 having a comb-like shape, and even transparent electrodes 12e are connected to each other at its end on the side opposite to the connected side of the odd transparent electrodes 12e, and configure the fourth electrode E4 having a comb-like shape engaging with the third electrode E3.

A normally white type switching liquid crystal panel may be used as the parallax barrier 12 of the present embodiment. In such a switching liquid crystal panel, when a potential difference between the first and second electrodes E1, E2 and the third and fourth electrodes E3, E4 opposed to each other is 0, the liquid crystal layer has the maximum light transmission, so that the maximum amount of the light can be passed over the entire area of the liquid crystal layer. In addition, in the present embodiment, a unipolar rectangular wave as AC voltage is applied to the first electrode E1, the second electrode E2, the third electrode E3, and the fourth electrode E4 included in the parallax barrier 12 to control drive of the parallax barrier 12.

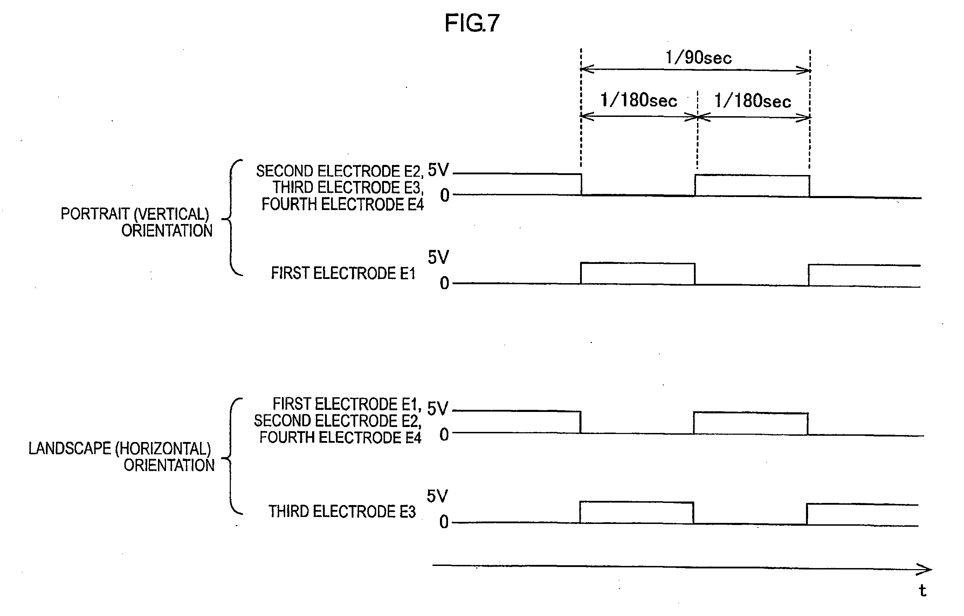

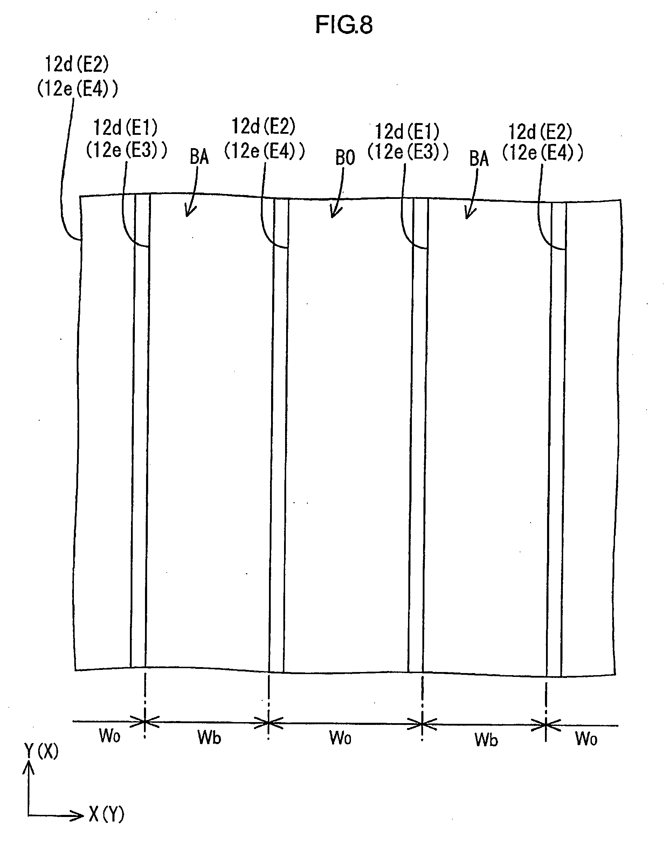

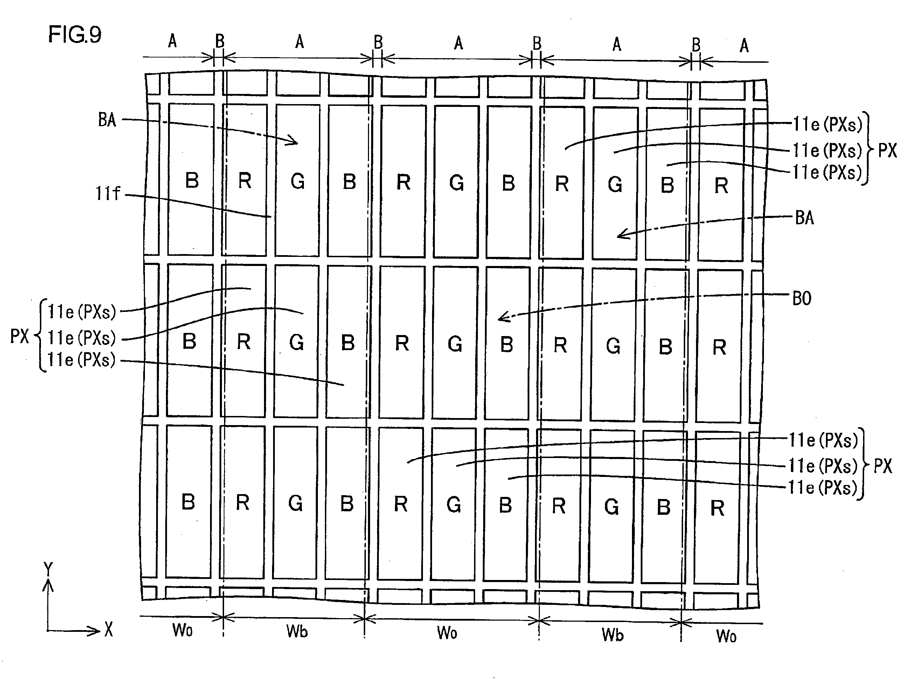

Specifically, as indicated in an upper half of FIG. 7, when the liquid crystal display device 10 is placed in the portrait orientation, the unipolar rectangular wave in the same phase is applied to each of the second electrode E2, the third electrode E3, and the fourth electrode E4 as the AC voltage, and the unipolar rectangular wave in the phase opposite to the second, third, and fourth electrodes E2, E3, E4 is applied to the first electrode E1 as the AC voltage. This does not generate a potential difference between the second electrode E2 and the third and fourth electrodes E3, E4, but a potential difference is generated between the first electrode E1 and the third and fourth electrodes E3, E4. Accordingly, the liquid crystal layer has a minimum light transmission at an area that overlaps with the first electrode E1 in a plan view and a maximum light transmission at an area that overlaps with the second electrode E2. In the present embodiment, the AC voltage applied to the electrodes E1 to E4 has a voltage value of about 0/5 V and a frequency of about 90 Hz. As illustrated in FIG. 8 and FIG. 9, this provides the barrier section BA and the barrier opening BO in the parallax barrier 12 at an area overlapping with the first electrode E1 and an area overlapping with the second electrode E2, respectively. The barrier section BA blocks the light and the barrier opening BO allows the light to pass therethrough. The barrier section BA and the barrier opening BA are alternately arranged in the X-axis direction. Each barrier opening BO is located between adjacent two of the barrier sections BA and each barrier section BA is located between adjacent two of the barrier openings BO. The barrier sections BA and the barrier openings BO each have the strip-like shape elongated in the Y-axis direction, like the transparent electrodes 12d. The barrier sections BA and the barrier openings BO are arranged alternately in the X-axis direction (the arrangement direction of the sub pixels PXs). A width Wb of the barrier section BA (a dimension measured in the X-axis direction) is substantially equal to the width of the transparent electrode 12d that configures the first electrode E1. A width Wo of the barrier opening BO (a dimension measured in the X-axis direction) is substantially equal to the sum of the width of the transparent electrode 12d that configures the second electrode E2 and twice the space between adjacent two transparent electrodes 12d.

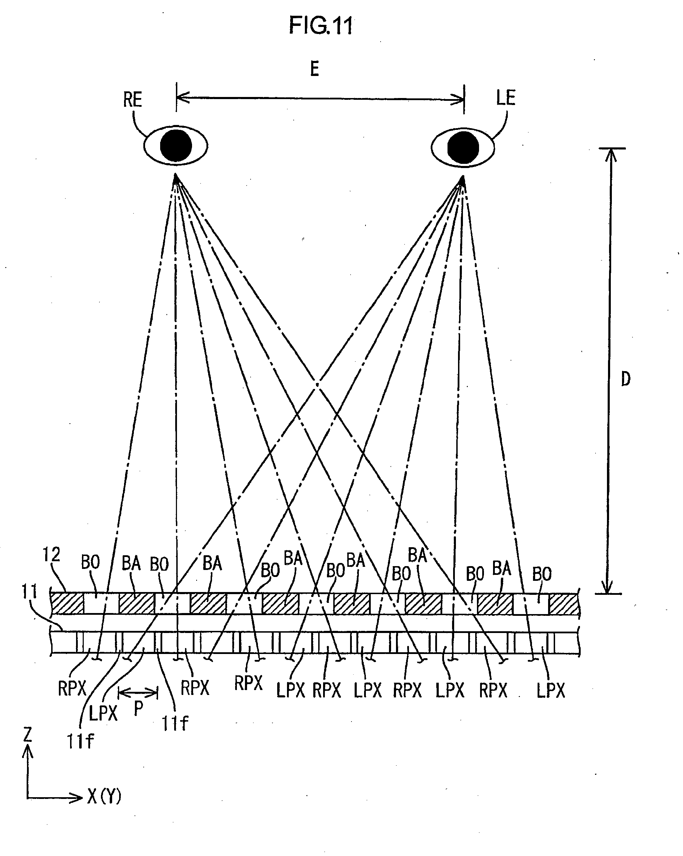

As illustrated in FIG. 11, eyes LE, RE of the viewer are aligned in the arrangement direction of the barrier sections BA and the barrier openings BO (the X-axis direction) while an image is displayed on pixels PX of the liquid crystal panel 11 placed in the portrait orientation. In such a state, the barrier sections BA limit a viewing angle of the displayed image and the image is only seen at a predetermined viewing angle through the barrier openings BO. Accordingly, the liquid crystal panel 11 is controlled to alternately display an image for left eye and an image for right eye on the pixels PX arranged in the X-axis direction, and thus the image for right eye (a pixel for right eye RPX) and the image for left eye (a pixel for left eye LPX) are separately seen by the right eye RE and the left eye LE, respectively, based on the parallax by the parallax barrier 12. This enables the viewer to see the stereoscopic image due to binocular disparity.

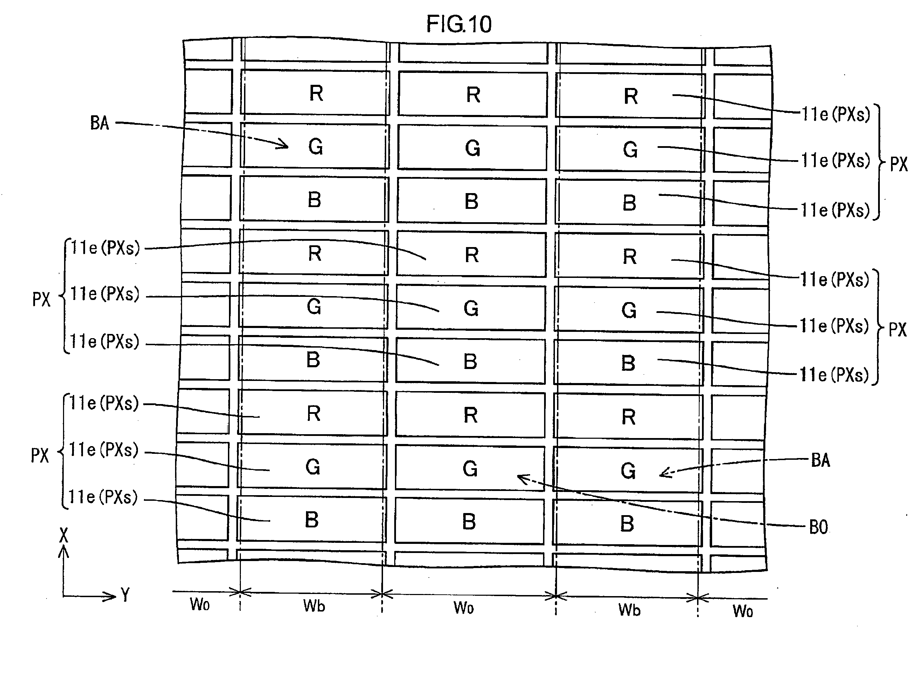

As indicated in a lower half of FIG. 7, when the liquid crystal display device 10 is placed in the landscape orientation, the unipolar rectangular wave in the same phase is applied to each of the first electrode E1, the second electrode E2, and the fourth electrode E4 as the AC voltage, and the unipolar rectangular wave in the phase opposite to the first, second, and fourth electrodes E1, E2, E4 is applied to the third electrode E3 as the AC voltage. This does not generate a potential difference between the first electrode E1 and the second and fourth electrodes E2, E4. However, a potential difference is generated between the first and second electrodes E1, E2 and the third electrode E3. Accordingly, as illustrated in FIG. 8 and FIG. 10, the liquid crystal layer has a minimum light transmission at an area that overlaps with the third electrode E3 in a plan view, thereby providing the barrier section BA, and the liquid crystal layer has a maximum light transmission at an area that overlaps with the fourth electrode E4, thereby providing the barrier opening BO. The barrier sections BA and the barrier openings BO each have the strip-like shape elongated in the X-axis direction. The barrier sections BA and the barrier openings BO are arranged alternately in the Y-axis direction. The liquid crystal display 11 is controlled to alternately display an image for left eye and an image for right eye on the pixels PX arranged in the Y-axis direction. As illustrated in FIG. 11, the eyes LE, RE of the viewer are aligned in the arrangement direction of the barrier sections BA and the barrier openings BO (the Y-axis direction), and an image is displayed on the pixels PX of the liquid crystal panel 11 placed in the landscape orientation. This enables image to be separated based on the parallax and allows the viewer to see the stereoscopic image. In FIG. 8 and FIG. 11, the symbols (12e, E3, E4), the X-axis, and the Y-axis are parenthesized to indicate the liquid crystal display device 10 placed in the landscape orientation. If the image is seen from a position away from the optimum viewing position in the Y-axis direction when the liquid crystal display device 10 is placed in the landscape orientation, a ratio of viewable area of R, G, and B sub pixels PXs included in the pixel PX is not varied. Thus, the problem of coloring is less likely to occur when the liquid crystal display device 10 is placed in the landscape orientation compared to the portrait orientation.

Preferably, the liquid crystal display device 10 that can display the stereoscopic image when placed in either the portrait orientation and the landscape orientation includes a gyro scope, which is not illustrated, to determine the orientation of the liquid crystal display device 10 (whether in the portrait orientation or in the landscape orientation). The liquid crystal panel 11 and the parallax barrier 212 may be automatically switched between a portrait mode and a landscape mode based on the determination.

When a flat image is required to be seen by the viewer, a unipolar rectangular wave as the AC voltage is applied to all of the electrodes E1 to E4 in the same phase. This does not generate a potential difference between the first and second electrodes E1, E2 and the third and fourth electrodes E3, E4, and thus the entire area of the liquid crystal layer has the maximum light transmission. That is, the parallax barrier 12 does not include the barrier section BO that blocks the light. Accordingly, the image displayed on the pixels PX of the liquid crystal panel 11 does not have the parallax, so that the viewer can see the flat image (the 2D image, the two-dimensional image).

The AC voltage applied to the electrodes E1 to E4 of the parallax barrier 12 may be a positive/negative symmetric rectangular wave. In such a case, to provide the stereoscopic image on the liquid crystal display device 10 placed in the portrait orientation, for example, the second, third, and fourth electrodes E2, E3, E4 are grounded, and the above-described positive/negative symmetric rectangular shape is applied to the first electrode E1 as the AC voltage. Accordingly, the area of the liquid crystal layer that overlaps with the first electrode E1 has a minimum light transmission. Thus, the barrier section BA is provided and the binocular parallax effect is obtained. To provide the flat image, all electrodes E1 to E4 are grounded (GND) to be unipotential. This generates no potential difference between the first and second electrodes E1, E2 and the third and fourth electrode E3, E4 opposed to each other.

If the conventional liquid crystal display device 10 placed in the portrait orientation is seen from the non-optimum viewing position, the area ratio of the sub pixels PXs of three colors included in the pixel PX seen through the barrier opening BO is unbalanced. This may cause the coloring in which the original color tone is lost. Specifically, if the viewer sees the liquid crystal display device 10 from a position away from the optimum viewing position in the X-axis direction, i.e., from a position away in the arrangement direction of the sub pixels PXs included in the pixels PX, as illustrated in FIG. 9, a viewable area of one of R, G, B sub pixels PXs that is positioned next to the barrier section BA changes and the viewable areas of the other sub pixels PXs positioned away from the barrier section BA do not change. Accordingly, the ratio of the sub pixels PXs to be seen is unbalanced, i.e., the original color tone is lost to cause the coloring. Further, if the liquid crystal display device 10 positioned either in the portrait orientation and the landscape orientation is seen from the non-optimum viewing position, the image is not sufficiently separated by parallax. This may cause crosstalk. Specifically, the image for left eye may be seen by the right eye RE and the image for right eye may be seen by the left eye LE. Further, an amount of light for displaying the image is limited depending on the setting of the barrier section BA of the parallax barrier 12. This may decrease the brightness of the display image.

The inventors of the present invention have studied to solve the above-described problems and focused on the width of the barrier section BA included in the parallax barrier 12, i.e., the dimension Wb measured in the arrangement direction of the pixels PX (in the X-axis direction). The inventors found the range of the width Wb in which the coloring, the crosstalk, and the brightness problem are less likely to or hardly occur. The range of the width Wb is applied to the barrier section BA of the parallax barrier 12 of this embodiment. Specifically, a preferable range of the width Wb is indicated by Expression (1) below where Wb (in "$\mu$m") is the width of the barrier section BA, A is the width (measured in the X-axis direction) of the pixels PX of the liquid crystal panel 11, and B (in "$\mu$m") is the width (measured in the X-axis direction) of the light blocking section 11f of the liquid crystal panel 11. Hereinafter, a comparative experiment will be explained. The range of Wb indicated in Expression (1) is determined based on the comparative experiment.

[Mathematical expression 11]

$$A - 6 \leq Wb \leq A + B / 2 \qquad (1)$$

<Comparative Experiment>

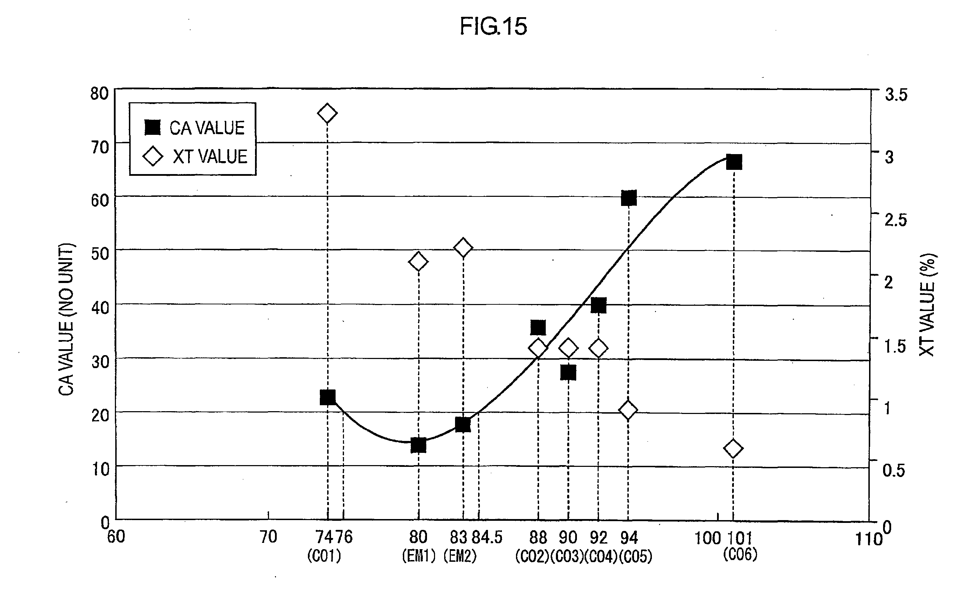

A comparative experiment is described in detail. Parallax barriers 12 (a total of eight parallax barriers) used in the comparative experiment each include the barrier sections BA having a width Wb that are varied for each parallax barrier 12. A degree of crosstalk (hereinafter, referred to as a XT value) and a degree of coloring (hereinafter, referred to as a CA value) are determined for each of the parallax barriers 12 that are placed in the portrait orientation. The results are indicated in a graph in FIG. 15. Specifically, Example 1 has "Wb = 80 $\mu$m", Example 2 has "Wb = 83 $\mu$m", Comparative Example 1 has "Wb = 74 $\mu$m", Comparative Example 2 has "Wb = 88 $\mu$m", Comparative Example 3 has "Wb = 90 $\mu$m", Comparative Example 4 has "Wb = 92 $\mu$m", Comparative Example 5 has "Wb = 94 $\mu$m", and Comparative Example 6 has "Wb = 101 $\mu$m". In this comparative experiment, as a precondition, the pixel PX has the width A of 82 $\mu$m, the sub pixel PXs has the width As of 24 $\mu$m, and the light blocking section 11f has the width B of 5 $\mu$m (see FIG. 4). In FIG. 15, Example 1, Example 2, Comparative Example 1, Comparative Example 2, Comparative Example 3, Comparative Example 4, Comparative Example 5, and Comparative Example 6 are abbreviated to "EM 1", "EM2", "CO1", "CO2", "CO3", "CO4", "CO5", and "CO6", respectively.

The width Wo of the barrier opening BO (measured in the X-axis direction), the width Wb of the barrier section BA, the width A of the pixel PX, and the width B of the light blocking section 11f have the relationship indicated by Expression (8) below. The width Wo of the barrier opening BO changes according to the change of the width Wb of the width BA of the barrier section. The width Wo always decreases with increase in the width Wb, and the width Wo always increases with decrease in the width Wb. The brightness of the parallax barrier 12 in Examples and Comparative Examples changes proportionally according to the width Wo of the barrier opening BO. The brightness increases with increase in the light transmitting area provided by the barrier opening (the width Wo) due to decrease in the light blocking area of the barrier section BA (the width Wb). On the contrary, the brightness decreases with decrease in the light transmitting area due to increase in the light blocking area provided by the barrier section BO (the width Wo). Specifically, Example 1 has "Wo = 94 $\mu$m", Example 2 has "Wo = 91 $\mu$m", Comparative Example 1 has "Wo = 100 $\mu$m", Comparative Example 2 has "Wo = 86 $\mu$m", Comparative Example 3 has "Wo = 84 $\mu$m", Comparative Example 4 has "Wo = 82 $\mu$m", Comparative Example 5 has "Wo = 80 $\mu$m", and Comparative Example 6 has "Wo = 73 $\mu$m".

[Mathematical expression 12]

$$Wb + Wo = 2A + 2B \qquad (8)$$

Expression (10) below is obtained by substituting the width Wb of the barrier section BA obtained by Expression (8) above into Expression (1) above. This provides a preferable range of the width Wo of the barrier opening BO. Wo that is in the range expressed by Expression (10) is always larger than Wb that is in the range expressed in Expression (1).

[Mathematical expression 13]

$$A + 3B/ 2 \leq Wo \leq A + 2B + 6 \qquad (10)$$

Experimental conditions for the above-described comparative experiment are described in detail. A distance D (in "mm") between a measurement position for measuring the XT value and the CA value and a position of the liquid crystal display device 10 (the parallax barrier 12) is determined by Expression (11) below. In Expression (11), "E" is a distance (in "mm") between the right eye RE and the left eye LE, "S" is a distance (in "mm") between the barrier section BA and the color section 11e of the color filter, "n" is a refractive index (no unit) between the barrier section BA and the color section 11e of the color filter, "P" is an arrangement pitch of the pixels PX, specifically, a dimension (in "mm") obtained by adding the width A of the pixel PX and the width B of the light blocking section 11f (see FIG, 3 and FIG. 11). For example, D is 318 mm when E is 62 mm, S is 0.68 mm, n is 1.52, and P is 0.087 mm. If P is changed to 0.096 mm, D is 289 mm. A position away from the liquid crystal display device 10 by the distance D is the optimum viewing position for viewing the stereoscopic image.

[Mathematical expression 14]

$$D = E \cdot S / n \cdot P \qquad (11)$$

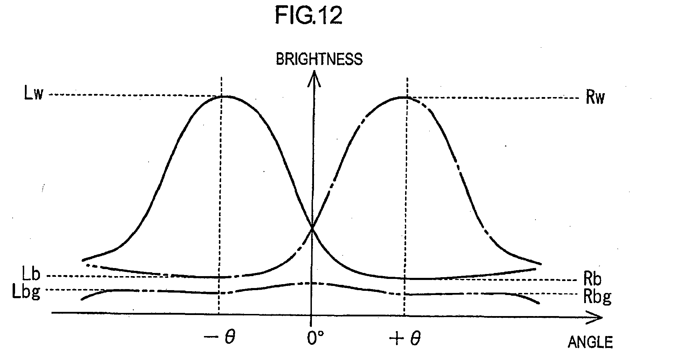

Next, the XT value that indicates the degree of crosstalk is explained. The XT value of the present embodiment is a mean value of an LXT value indicating a degree of crosstalk of the right eye RE and a RXT value indicating a degree of crosstalk of the left eye LE. Hereinafter, the XT value will be explained with reference to FIG. 12, Expression (12), and Expression (13). In FIG. 12, a vertical axis indicates the brightness and a horizontal axis indicates an angle (a viewing angle) with respect to a normal direction of the display surface at a measuring position. "-$\theta$" indicates an inclination angle of the display surface to the left and "+$\theta$" indicates an inclination angle of the display surface to the right. FIG. 12 indicates relationships between the angel $\theta$ and the brightness. In FIG. 12, a graph indicated by a solid line indicates a case in which the pixels for right eye RPX of the liquid crystal panel 11 are displayed in black and the pixels for left eye LPX of the liquid crystal panel 11 are displayed in white, a graph indicated by a one-dotted chain line indicates a case in which the pixels for right eye RPX of the liquid crystal panel 11 are displayed in white and the pixels for left right LPX are displayed in black, and a graph indicated by a two-dotted chain line indicates a case in which the pixels for left eye LPX and the pixels for right eye RPX are displayed in black.

The LXT value is a ratio between a brightness Lw and a brightness Lb, in which the brightness Lw is the brightness of the image for left eye (-$\theta$ side) at the time when the pixels for right eye RPX are displayed in black and the pixels for left eye are displayed in white (the graph indicated by the solid line in FIG. 12) and the brightness Lb is the brightness of the image for left eye (-$\theta$ side) at the time when the pixels for right eye RPX are displayed in white and the pixels for left eye LPX are displayed in black (the graph indicated by the one-dotted chain line in FIG. 12). The LXT value is defined by Expression (12) below. The RXT value is a ratio between a brightness Rw and a brightness Rb, in which the brightness Rw is the brightness of the image for right eye (+$\theta$ side) at the time when the pixels for right eye RPX are displayed in white and the pixels for left eye are displayed in black (the graph indicated by the one-dotted chain line in FIG. 12) and the brightness Rb is the brightness of the image for right eye (+θ side) at the time when the pixels for right eye RPX are displayed in black and the pixels for left eye LPX are displayed in white (the graph indicated by the solid line in FIG. 12). The RXT value is defined by Expression (13) below. In Expression (12), the "brightness Lbg" is the brightness of the image for left eye when the pixels for left eye LPX and the pixels for right eye RPX are displayed in black (the graph indicated by the two-dotted chain line in FIG. 12). In Expression (13), the "brightness Rbg" is the brightness of the image for right eye at the time when the pixels for left eye LPX and the pixels for right eye RPX are displayed in black. In FIG. 12, dashed lines extending along the vertical axis indicate the angles +θ, -θ at the above-described optimum viewing position. The XT values are measured at this viewing position in this comparative experiment. The XT values at the angles +θ, -θ in FIG. 12 are the minimum values. The larger the XT value, a twin image or ghosting is more likely to appear, thereby reducing the display quality. The smaller the XT value, a twin image is less likely to appear, thereby improving the display quality.

[Mathematical expression 15]

$$LXT = (Lb - Lbg) / (Lw - Lbg) \qquad (12)$$

[Mathematical expression 16]

$$RXT = (Rb - Rbg) / (Rw - Rbg) \qquad (13)$$

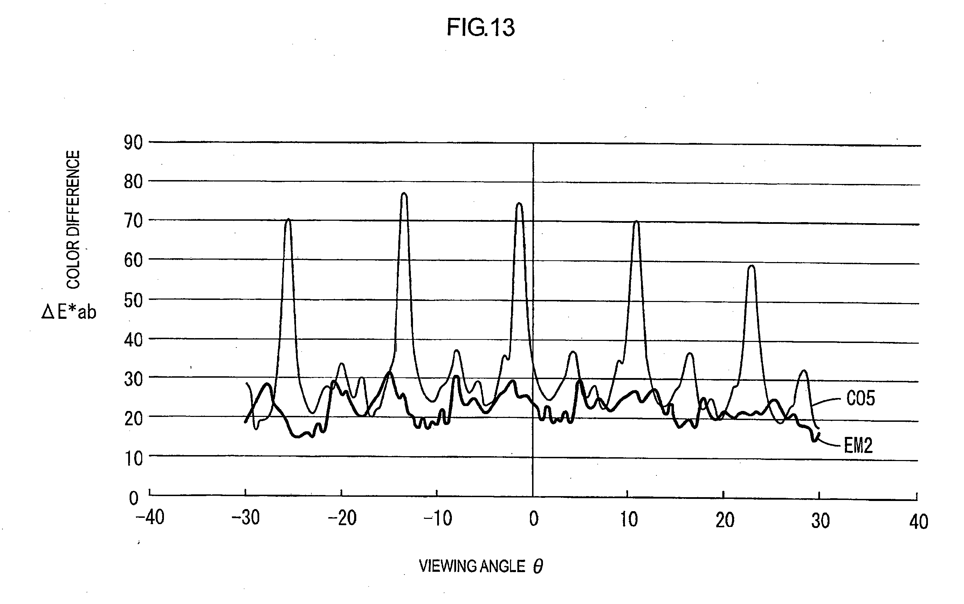

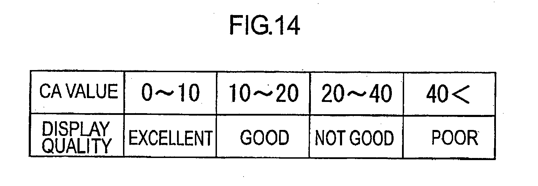

Next, the CA value indicating a degree of coloring is explained. The CA value is defined by a variation in the color difference caused by the viewing angle between the stereoscopic image and the flat image. The CA value will be explained with reference to FIG. 13, FIG. 14, and Expression (14). In the determination of the CA value, while the flat image is displayed on the liquid crystal panel 11 entirely in white, an X value, a Y value, and a Z value, which are tristimulus values in the XYZ color space, are obtained by varying the angle (the viewing angle) between a measurement position and the line normal to the display surface. The X value, the Y value, and the Z value are obtained for the stereoscopic image in the same manner as above. FIG. 13 illustrates a relationship between the color difference and the viewing angle. The relationship is obtained by calculating the color difference between the stereoscopic image and the flat image at each viewing angle. In FIG. 13, a vertical axis corresponds to the color difference $\Delta E^*ab$ (no unit) and a horizontal axis corresponds to the viewing angle θ. The CA value is a difference between the minimum value and the maximum value of the obtained color difference $\Delta E^*ab$. FIG. 13 illustrates Example 2 having relatively small CA values (indicated with a heavy line in FIG. 13) and Comparative Example 5 having relatively large CA values (indicated with a thin line in FIG. 13) as examples. In FIG. 13, like FIG. 15, Example 2 is abbreviated to "EM 2" and Comparative Example 5 is abbreviated to "CO 5". The larger the variation in the color difference, the CA value is more likely to increase, thereby reducing the display quality. The smaller the variation in the color difference, the CA value is more likely to decrease, thereby improving the display quality. Specifically, FIG. 14 indicates a relationship between the CA value and the display quality. When the CA value is within a range of 0 to 10, the coloring is hardly recognized by the viewer, which means that the display quality is "excellent". When the CA value is within a range of 10 to 20, the coloring is less likely to be recognized by the viewer, which means that the display quality is "good". When the CA value is within a range of 20 to 40, the coloring is likely to be recognized by the viewer, which means that the display quality is "not good". When the CA value is more than 40, the coloring is easily recognized by the viewer, which means that the display quality is "poor". In the comparative experiment, the display quality of "excellent" and "good", i.e., the CA value within a range of 0 to 20, is considered as sufficient good display quality.

The color difference $\Delta E^*ab$ is defined by Expression (14), which will be described later. In Expression (14), $\Delta L^*$ is a brightness $L^*$ in CIE1976 ($L^*a^*b^*$) and indicates the difference between the brightness $L^*3D$ of the stereoscopic image and the brightness $L^*2D$ of the flat image. Further, $\Delta a^*$ is a hue $a^*$ in CIE 1976 ($L^*a^*b^*$) and indicates a difference between a hue $a^*3D$ of the stereoscopic image and a hue $a^*2D$ of the flat image. Further, $\Delta b^*$ is a chroma $b^*$ in CIE 1976 ($L^*a^*b^*$) and indicates a difference between a chroma $b^*3D$ of the stereoscopic image and a chroma $b^*2D$ of the flat image.

[Mathematical expression 17]

$$\Delta E^*ab = [(\Delta L^*)2 + (\Delta a^*)2 + (\Delta b^*)2] 1 / 2 \qquad (14)$$

The results of the comparative experiment conducted under the above-described conditions will be described in detail with reference to FIG. 15. As can be seen from the XT values of Examples and Comparative Examples in FIG. 15, the XT value decreases with increase in the width Wb of the barrier section BA included in the parallax barrier 12, and the XT value increases with decrease in the width Wb. This indicates that the image displayed on the pixels PX of the liquid crystal panel 11 can be properly separated by parallax when the area in which the light is blocked by the barrier section BA is large. On the contrary, the image cannot be properly separated by parallax when the area in which the light is blocked by the barrier section BA is small, and thus a twin image is likely to occur (see FIG. 11). On the other hand, the width Wo of the barrier opening BO decreases with increase in the width Wb of the barrier section BA. This reduces the area through which the light passes, and thus the amount of the light, i.e., the brightness, decreases. On the contrary, the width Wo of the barrier opening BO increases with decrease in the width Wb of the barrier section BA. This increases the area through which the light passes, and thus the brightness increases. The XT value and the brightness are inconsistent with the variation of the width of the barrier section BA.

With respect to the CA value, when the width Wb of the barrier section BA is a specific value, specifically, 80 $\mu$m in Example 1, the CA value is the lowest, so that the viewer can see the image in the original color tone. However, the CA value becomes larger in both cases in which the width Wb is smaller than 80 $\mu$m (Comparative Example 1) and larger than 80 $\mu$m (Example 2, Comparative Examples 2 to 6). The CA value tends to increase as an absolute value of a difference with respect to 80 $\mu$m increases. The optimum value of the CA value is obtained when Expression (3) in which 2 $\mu$m is subtracted from the width A of the pixel PX is satisfied. As indicated in FIG. 14, sufficiently high display quality can be obtained as long as the CA value is 20 or less. With respect to the XT value, sufficiently high display quality can be obtained as long as the XT value is 3% or less. The width Wb of the barrier section BA is set within the range in Expression (1) in consideration of the relationship among the CA value, the XT value, and the brightness. Accordingly, the crosstalk and the coloring hardly occur and the sufficiently high brightness is obtained, and thus the sufficiently high display quality is obtained. Expression (15) below indicates a preferable range of the width Wb of the barrier section BA in the comparative experiment. The preferable range is obtained by substituting a specific value of the width A of the pixel PX according to the comparative experiment and a specific value of the width B of the light blocking section 11f to Expression (1). The range indicated in Expression (15) includes the values in Examples 1 and 2, but does not include the values in Comparative Examples 1 to 6. Threshold values (76 $\mu$m, 84.5 $\mu$m) in the range of Expression (15) are indicated in FIG. 15. In the range indicated by Expression (15), the CA value is always 20 or less. In addition, when Wb is within the range indicated by Expression (15), the width Wo of the barrier opening BO is within a range indicated by Expression (16) below.

[Mathematical expression 18]

$$Wb = A - 2 \qquad (3)$$

[Mathematical expression 19]

$$76 \leq Wb \leq 84.5 \qquad (15)$$

[Mathematical expression 20]

$$89.5 \leq Wo \leq 98 \qquad (16)$$

The range of the width Wb of the barrier section BA has a further preferable range within the above-described range. Specifically, as indicated in Expression (2) below, if the width Wb is 82 $\mu$m or less that is smaller than the width A of the pixel PX, a small CA value and a high brightness can be obtained. With respect to the XT value, if the image for left eye and the image for right eye displayed on the pixels PX are set to have less parallax (difference in vision) or to have similar color tones (less contrast difference), for example, the viewer is less likely to recognize the twin image, and thus the crosstalk hardly occurs. That is, the crosstalk can be reduced depending on the setting (contents) of the image displayed on the pixels PX. However, the problems of the coloring and the brightness are fundamental problems that occur in any image displayed on the pixels PX. The width Wb set within Expression (2) below can solve such fundamental problems of coloring and brightness.

[Mathematical expression 21]

$$Wb \leq A \qquad\qquad (2)$$

Further, the coloring can be most effectively reduced, when the width Wb of the barrier section BA is set to the value indicated by above Expression (3), i.e., 80 $\mu$m. In addition, the highest brightness can be obtained, when the width Wb is set to the value indicated by Expression (4) below, i.e., 74 $\mu$m. In addition, the crosstalk can be most effectively reduced, when the width Wb is set to the value indicated by Expression (6) below.

[Mathematical expression 22]

$$Wb = A - 6 \qquad\qquad (4)$$

[Mathematical expression 23]

$$Wb = A + 2 / B \qquad\qquad (6)$$

[Mathematical expression 24]

$$Wb = A \qquad\qquad (5)$$

As described above, the liquid crystal display device (the display device) 10 according to this embodiment includes the liquid crystal panel (the display panel) 11 and the parallax barrier 12. The liquid crystal panel 11 includes the pixels PX arranged linearly in at least one direction and the light blocking sections 11f each arranged between adjacent two of the pixels PX and configured to block light. The barrier sections BA are arranged to face the liquid crystal panel 11 and configured to separate an image displayed on the pixels PX by parallax. The parallax barrier 12 includes the barrier sections BA and the barrier openings BO. The barrier sections BA are arranged in the arrangement direction of the pixels PX and configured to block light. The barrier openings BO are arranged between adjacent two of the barrier sections BA and configured to allow the light to pass therethrough. Each of the barrier sections BA has the dimension Wb ($\mu$m) measured in the arrangement direction that satisfies Expression (1) above, in which Wb ($\mu$m) is the dimension of each of the barrier sections, A ($\mu$m) is the dimension of each of the pixels PX measured in the arrangement direction, and B ($\mu$m) is the dimension of each of the light blocking sections 11f measured in the arrangement direction.

In this configuration, the parallax barrier 12 facing the liquid crystal panel 11 includes the barrier sections BA arranged in the arrangement direction of the pixels PX and the barrier openings BO each arranged between adjacent two of the barrier sections BA. Accordingly, the image displayed on the pixels PX is seen at a specific viewing angle through the barrier openings BO arranged between the barrier sections BA. This enables the image displayed on the pixels PX to be separated by parallax, and thus the viewer can see the stereoscopic image (the 3D image, the three-dimensional image).

In the conventional display devices, if the viewer see the display panel from the non-optimum viewing position, which is away from the optimum viewing position, the coloring may occur in which the original color tone of the pixels PX seen through the barrier opening is lost. In addition, if the viewer sees the display from the non-optimum viewing position, the crosstalk may occur in which the separation of the image by parallax is insufficient. In addition, the amount of light for displaying may be limited by the barrier sections, and thus the brightness of the image may decrease.

According to the study conducted by the present inventors, the separation of the image by parallax is improved with increase in the dimension Wb of the barrier section BA measured in the arrangement direction, and thus the crosstalk hardly occurs. However, the area of the barrier opening BO through which the light passes decreases with increase in the area of the barrier section BA that blocks the light, and thus the brightness decreases. On the other hand, the area of the barrier section BA that blocks the light decreases with decrease in Wb, and thus the area of the barrier opening BO through which the light passes increases. This increases the brightness, but the image cannot be properly separated by parallax, and thus the crosstalk may easily occur. According to the further study conducted by the present inventors, the pixels PX are seen in the original color tone through the barrier opening BO when Wb is within the predetermined range. That is, according to the study, the coloring hardly occurs when Wb is within the predetermined range, but the coloring may easily occur when Wb is larger or smaller than the predetermined range.

The inventors of the present invention have conducted further intensive study and found that, by setting the dimension Wb of the barrier section BA in the arrangement direction within the range in Expression (1) above, the image can be sufficiently separated by parallax, the sufficient amount of light can pass through the barrier opening, and the pixel can be seen in the original color tone. Accordingly, the crosstalk hardly occurs and high brightness is obtained, and further the coloring is less likely to occur.

Each of the barrier sections BA has Wb that satisfies Expression (2) above. The problem of crosstalk is less likely to occur depending on the images displayed on the pixels PX. However, the problems of coloring and brightness are fundamental problems that occur in any image displayed on the pixels PX. The dimension Wb set within the above range can reduce the coloring and provide higher brightness.

Each of the barrier section BA has Wb that satisfies Expression (3) above. With this configuration, the coloring is further less likely to occur.

In addition, each of the barrier sections BA has Wb that satisfies Expression (4) above. With this configuration, the brightness can be highest within the range in Expression (1) above.

Each of the barrier sections BA has Wb that satisfies Expression (5) above. In this configuration in which the barrier section BA has the same dimension as the pixel PX, the coloring and the crosstalk can be reduced and the high brightness can be obtained.

Each of the barrier sections BA has Wb that satisfies Expression (6) above. With this configuration, the crosstalk is least likely to occur within the range in Expression (1) above.

Each of the barrier openings BO has the dimension Wo($\mu$m) measured in the arrangement direction. The dimension of each of the barrier sections BA and the dimension of each of the barrier openings BO satisfy Expression (7) below, in which Wo($\mu$m) is the dimension of each of the barrier openings BO and K is the constant. According to the expression, the dimension Wo of each barrier opening BO in the arrangement direction is obtained by subtracting the dimension Wb of the barrier section BA from the constant K. Thus, Wo always decreases with increase in Wb. On the contrary, Wo always increases with decrease in Wb. Such a correlation between the barrier section BA and the barrier opening BO makes the problem of crosstalk and the problem of brightness inconsistent. However, Wb set within the range satisfying Expression (1) can reduce the crosstalk and can also provide the high brightness.

[Mathematical expression 25]

$$K = Wb + Wo \qquad (7)$$

The dimensions Wb and Wo of the barrier sections BA and the dimension of the barrier openings BO satisfy Expression (8). In this configuration in which the sum of Wb of the barrier opening BA and Wo of the barrier opening is equal to twice the sum of the dimension A of the pixel PX and the dimension B of the light blocking section 11f, the coloring and the crosstalk are less likely to occur and high brightness can be obtained.

Each of the pixels PX includes the sub pixels PXs arranged in the arrangement direction. The light blocking section 11f are each arranged between adjacent two of the sub pixels PXs. Each of the pixels PX has A that satisfies Expression (9) above, in which As ($\mu$m) is the dimension of each of each of the sub pixels PXs measured in the arrangement direction, n is the number of the sub pixels included in each of the pixels (a positive integer of two or more), and B is the dimension of each of the light blocking sections 11f arranged between the sub pixels PXs. With this configuration, the crosstalk and the coloring are less likely to occur in the liquid crystal panel 11 including the pixels PX each including the sub pixels PXs and high brightness can be obtained.

The parallax barrier 12 includes two substrates 12a, 12b facing each other and liquid crystals sealed between the substrates 12a, 12b. In this configuration, the liquid crystal panel is used as the parallax barrier 12. Accordingly, the production cost can be reduced, for example.

The liquid crystal display device 10 further includes the transparent electrodes 12d arranged in the arrangement direction on at least one of the substrates12a, 12b. The transparent electrodes each have a strip-like shape. The light transmission of the liquid crystals is controlled by a voltage applied to the transparent electrodes, thereby selectively providing the barrier section BA in the parallax barrier 12. In this configuration, for example, if the liquid crystals are controlled to have the maximum light transmission over the entire area thereof, the parallax barrier 12 does not include the barrier section BA, and thus the image displayed on the pixels PX does not have the parallax. The barrier section BA can be selectively provided by the voltage applied to each of the transparent electrodes 12d. Accordingly, this allows the viewer to selectively see the stereoscopic image (the 3D image, the three-dimensional image) and the flat image (the 2D image, the two-dimensional image). The stereoscopic image and the flat image can be switched.

The parallax barrier 12 is arranged on the display surface side of the liquid crystal panel 11. With this configuration, if the parallax barrier 12 is configured to have a touch panel function, the viewer can directly touch the touch panel on the display surface side. This improves functionality of the liquid crystal display device 10.

The liquid crystal panel 11 includes two substrates 11a, 11b facing each other and liquid crystals sealed between the substrates 11a, 11b. In this configuration, the liquid crystal panel 11 is used as the display panel. Accordingly, the production cost can be reduced, for example.

The liquid crystal display device 10 further includes the backlight unit (the lighting device) 12 configured to supply light to the liquid crystal panel 11. The backlight unit 12 is arranged to face a surface opposite to the display surface of the liquid crystal panel 11. With this configuration, an image can be displayed on the pixels PX of the liquid crystal panel 11 by the light supplied from the backlight unit 12. This can increase the brightness of the displayed image.

<Second Embodiment>

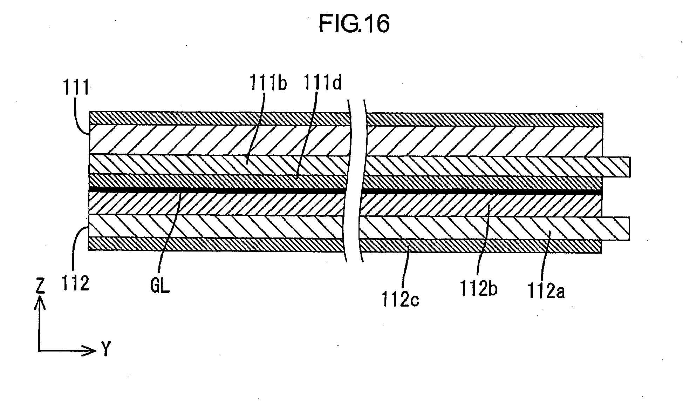

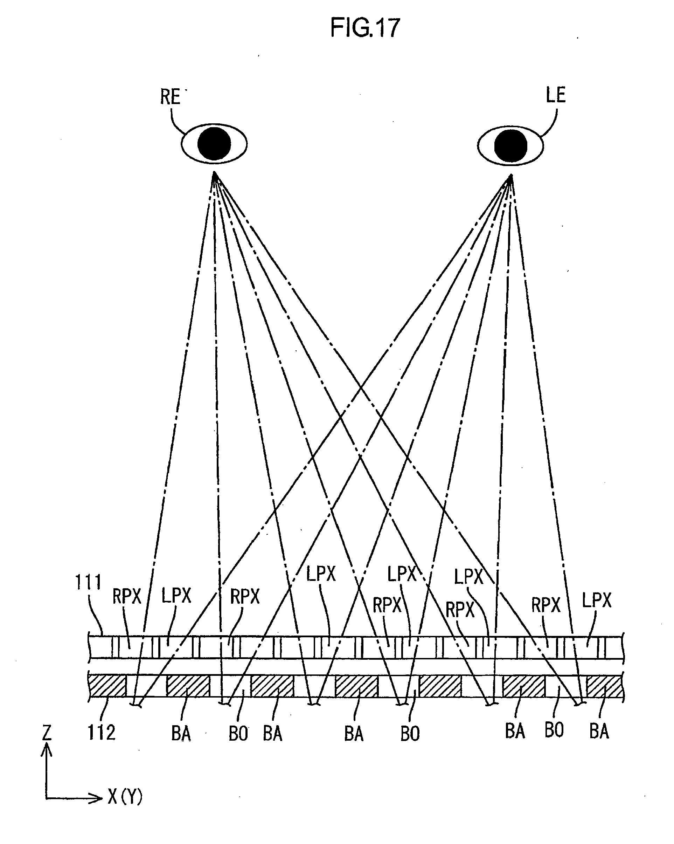

The second embodiment of the present invention will be described with reference to FIG. 16 and FIG. 17. The second embodiment includes a liquid crystal display device 111 and a parallax barrier 112 arranged in a reversed positional relationship. The construction, operations and effects same as those in the first embodiment will not be explained.

As illustrated in FIG. 16, the parallax barrier 112 according to the second embodiment is arranged on a rear side (a backlight unit side, which is not illustrated, a side opposite to the viewer) of the liquid crystal panel 111. Specifically, a second substrate 112b included in the parallax barrier 112 is provided on a polarizing plate 111d attached to an outer surface of an array substrate 111b included in the liquid crystal panel 111 with an adhesive layer GL therebetween. In addition, a polarizing plate 112c is attached to an outer surface of a first substrate 112a included in the parallax barrier 112. As illustrated in FIG. 17, the parallax barrier 112 according to the configuration is configured to include the barrier sections BA. Accordingly, the viewer separately sees the pixels for right eye RPX and the pixels for left eye LPX by parallax.

<Third Embodiment>

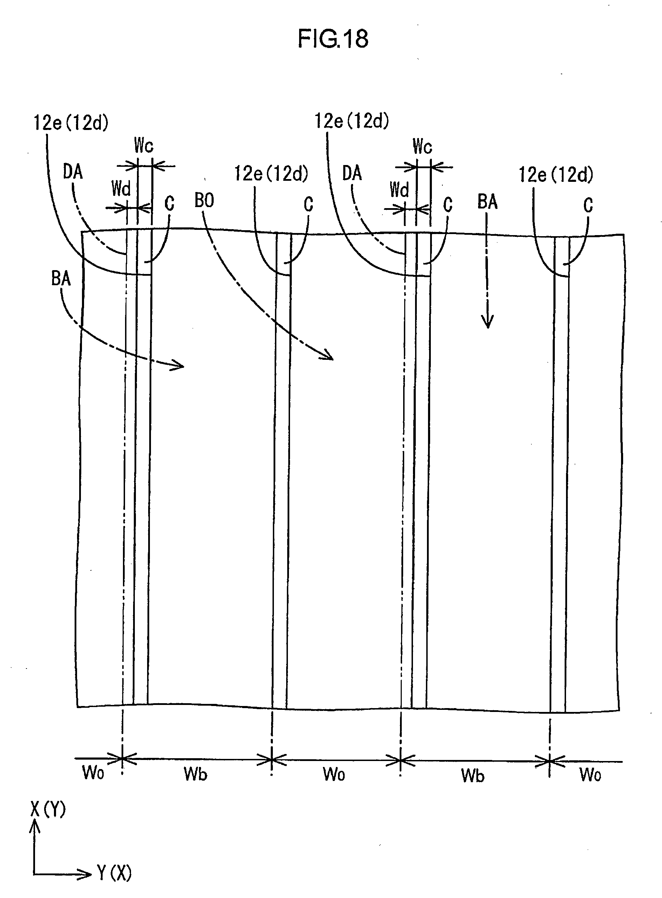

The third embodiment according to the present invention will be described with reference to FIG. 18. In the third embodiment, the barrier section BA is designed in consideration of a space between the transparent electrodes 12e (12d), and further a disclination area DA. The construction, operations and effects same as those in the first embodiment will not be explained.

As described in the first embodiment, the parallax barrier 12 is required to include the electrodes E1 to E4 that are arranged perpendicular to each other (see FIG. 5 and FIG. 6) to have the liquid crystal display device 10 that can display a stereoscopic image when placed in both of the portrait orientation (the vertical position) and the landscape orientation (the horizontal position). However, this may cause the following problems. As illustrated in FIG. 18, a predetermined space C is provided between adjacent transparent electrodes 12e on the second substrate 12b to maintain the transparent electrodes 12e in an electrically-insulate state and to reduce a parasitic capacity, for example. Such a space C is also provided between the transparent electrodes 12d on the first substrate 12a. However, an effective voltage value may not be obtained at the space C when the voltage is applied to the electrodes E1 to E4 to display the stereoscopic image. In such a case, a potential difference may occur in the area overlapping with the space C where the potential difference should not occur. This may expand the barrier section BA to include the space C between the transparent electrodes 12e (12d).

Further, a step may be formed at a boundary between the space C and the transparent electrode 12e (12d) next to it. In the production of the parallax barrier 12, a rubbing process is performed to form an alignment film for aligning the liquid crystal layer. The rubbing process may not be sufficiently performed around the end portion of the transparent electrode 12e (12d) due to the step. This may cause disclination, in which the alignment of the liquid crystal molecules is disordered, at the area overlapping with the end portion of the transparent electrode 12e (12d). In the area DA where the disclination occurs, the light transmission of the liquid crystal layer cannot be controlled by the application of voltage, and thus the barrier section BA may be expanded to include the disclination area DA.

In view of the above, the width Wb of the barrier section BA is set to include a width Wc of the space C between the transparent electrodes 12e (12d) and a width Wd of the disclination area DA, as illustrated in FIG. 18. Then, the width Wb is set in the range in Expression (1) described in the first embodiment. With this configuration, the crosstalk and the coloring are less likely to occur and high brightness can be obtained even if the above problem occurs. Accordingly, the high display quality can be obtained.

As described above, according to the present embodiment, the liquid crystal panel 11 includes the pixels PX arranged in a matrix. Further, the transparent electrodes 12d, 12e are arranged perpendicular to each other on each of the substrates 12a, 12b included in the parallax barrier 12. Further, the barrier section BA has Wb that is obtained by adding at least the width of the transparent electrode 12e (12d) and the width Wc of the space C between adjacent two of the transparent electrodes 12e (12d). With this configuration, the viewer can see the stereoscopic image regardless of the orientation of the liquid crystal panel 11, i.e., the portrait orientation or the landscape orientation. Further, according to this configuration in which the barrier section BA has the dimension Wb including the width Wc of the space C between the transparent electrodes 12e (12d) as above, even if the desired potential difference is not obtained in the area between the adjacent transparent electrodes 12e (12d) and the light transmission of the liquid crystal is not properly controlled to lead the expansion of the barrier section BA, the crosstalk and the coloring are less likely to occur and high brightness can be obtained.

The parallax barrier 12 includes the disclination area DA in which the disclination is generated in the liquid crystals at the area overlapping with the end portion of the transparent electrode 12e (12d) in a plan view. The barrier section BA has Wb that is equal to the sum of the width of the transparent electrode 12e (12d), the width Wc of the space C between adjacent two of the transparent electrodes 12e (12d), and the width Wd of the disclination area DA. In this configuration, the width Wb of the barrier section BA includes the width Wd of the disclination area DA in addition to the width Wc of the space C between the transparent electrodes 12e (12d) as above. Accordingly, even if the alignment of the liquid crystals is disordered in the disclination area DA and the desired potential difference is not obtained, which may lead improper control of the light transmission and expand the barrier section BA, the crosstalk and the coloring are less likely to occur and high brightness can be obtained.

<Other Embodiments>

The present invention is not limited to the embodiments explained in the above description with reference to the drawings. The following embodiments may be included in the technical scope of the present invention, for example.

(1) The liquid crystal display device of the above embodiments may include a touch panel at a side closest to the viewer. The touch panel can read a position of a touch on the display surface of the liquid crystal panel. The touch panel may be integrally provided on the parallax barrier that is arranged on the viewer side of the liquid crystal panel, which is described in the above first and third embodiments. For example, a wiring pattern for the touch panel may be provided on the substrate included in the parallax barrier

(2) The above embodiments use the normally white type switching liquid crystal panel as the parallax barrier. However, a normally black type switching liquid crystal panel may be used. In the normally black type switching liquid crystal panel, when a potential difference between the opposing electrodes is 0, the liquid crystals have the minimum light transmission, and thus the light is not allowed to pass therethrough over the entire area thereof.

(3) In the above-described comparative experiment in the first embodiment, the barrier sections each having the width Wb of 80 $\mu$m (Example 1) and the width Wb of 74 $\mu$m (Example 2) are used as the examples having the width within the range of Expression (1). The width Wb of the barrier section may be properly changed within the range in Expression (1).

(4) In the comparative experiment in the above-described first embodiment, the width A of the pixel is 82 $\mu$m, the width As of the sub pixel is 24 $\mu$m, and the width B of the light blocking section is 5 $\mu$m. However, one or two or all of the width A of the pixel, the width As of the sub pixel, and the width B of the light blocking section may be properly changed. In such a case, the width Wb of the barrier section is set to be in the range described in Expression (1) to obtain high effect.

(5) The XT value and the CA value may be obtained by a different calculation method other than the calculation method in the comparative experiment of the first embodiment. The same results as the above comparative experiment will be obtained by the different calculation method.

(6) In the above embodiments, the sum of the width Wb of the barrier section and the width Wo of the barrier opening is equal to twice the sum of the width A of the pixel and the width B of the light blocking section (the relationship satisfying Expression (8)). However, according to the present technology, the sum of the width Wb and the width Wo may not be equal to twice the sum of the width A and the width B.

(7) In the above embodiments, the transparent electrodes arranged in the arrangement direction of the pixels and the pixels arranged in the arrangement direction are the same in number. However, according to the present technology, the transparent electrodes arranged in the arrangement direction and the pixels in the arrangement direction may not be the same in number (one of them may be larger or smaller in number).

(8) In the above embodiments, the pixel includes three sub pixels. However, the pixel may include two or four or more sub pixels. If the number of sub pixels is changed from three, preferably, colors of the color sections of the color filter corresponding to the sub pixels are changed accordingly. For example, if the pixel includes four sub pixels, the color filter may further include a yellow (Y) color section in addition to R, G, and B color sections.

(9) In the above embodiments, the pixel includes the sub pixels. However, the pixel may not include the sub pixels.

(10) The above third embodiment describes the case in which the disclination occur in the liquid crystal display device that can display the stereoscopic image when placed in both of the portrait orientation and the landscape orientation. However, if the occurrence of the disclination is prevented by changing the formation method of the alignment film (for example, using a photo-alignment technology), the width Wb of the barrier section is not required to include the width of the disclination area.

(11) The above third embodiment, the desired potential difference is not obtained at the space between the transparent electrodes. However, if the desired potential difference is obtained at the space between the transparent electrodes by changing the formation method of the transparent electrodes, for example, the width Wb of the barrier section may not include the width of the space between the transparent electrodes.

(12) The above embodiments use the switching liquid crystal panel, which is an active component, as the parallax barrier, in which the flat image display and the stereoscopic image display can be switched. However, the active component other than the liquid crystal panel (an organic EL panel, for example) may be used as the parallax barrier.

(13) Other than the above (12), as the parallax barrier, inactive pixels that are configured to always display a stereoscopic image and cannot be switched to the flat image display may be used. For example, a mask filter having a specific light blocking pattern may be used.

(14) In the above embodiments, the backlight unit included in the liquid crystal display device is the edge-light type backlight unit. However, the backlight unit may be a direct-type backlight unit.

(15) In the above embodiments, the liquid crystal display device is a transmission type liquid crystal display device including the backlight unit as an external light source. However, the technology may be applied to a reflection type liquid crystal display device configured to display using outside light. In such a case, the liquid crystal display device may not include the backlight unit.

(16) In the above embodiments, the liquid crystal display device includes a display screen having an elongated rectangular shape. However, the liquid crystal display device may include a display screen having a square shape.

(17) In the above embodiments, the TFTs are used as switching components of the liquid crystal display device. However, the technology described herein may be applied to liquid crystal display devices using switching components other than TFTs (e.g., thin film diodes (TFDs)). Furthermore, the technology may be applied to black-and-white liquid crystal display devices other than a color liquid crystal display device.

(18) The above embodiments employs the liquid crystal display device including the liquid crystal panel as a display panel. However, the technology can be applied to display devices including other types of display panels (such as PDP and an organic EL panel). In such a case, the backlight unit may not be included.

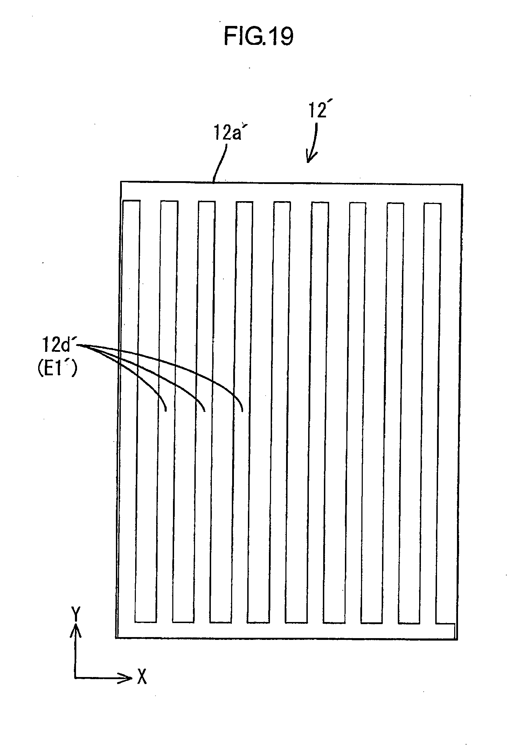

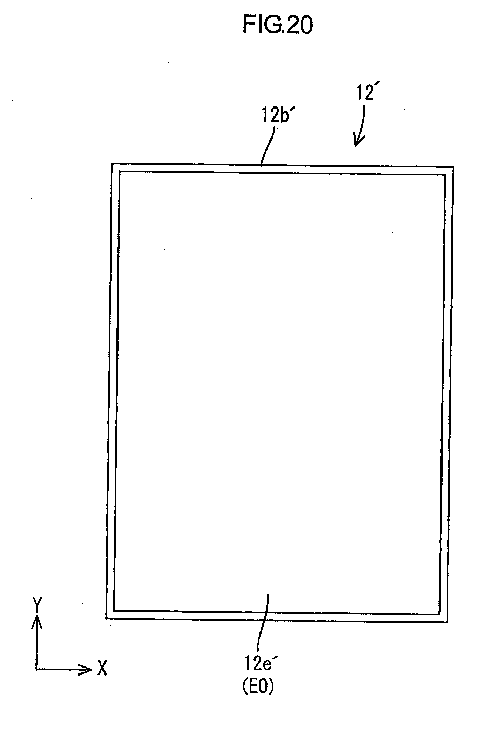

(19) The above embodiments describe the liquid crystal display device that can display the stereoscopic image when placed in both of the portrait (vertical) orientation and the landscape (horizontal) orientation. However, the liquid crystal display device according to the present technology may have a configuration that can display the stereoscopic image only when placed in one of the portrait orientation and the landscape orientation. For example, FIG. 19 and FIG. 20 illustrate the configuration that can display the stereoscopic image only when the liquid crystal display device is placed in the portrait orientation. The configuration includes a first electrode E1' in the comb-like shape including transparent electrodes 12d' each elongated in the Y-axis direction on a first substrate 12a' included in a parallax barrier 12'. The configuration further includes the counter electrode EO including a transparent electrode 12e' in the solid pattern in a plan view on a second substrate 12b'. Then, like the above-described embodiments, a potential difference may be generated between the first electrode E1' and the counter electrode EO to display the stereoscopic image. Although not illustrated in the drawings, the liquid crystal display device that can display the stereoscopic image only when placed in the landscape orientation may include the first electrode in the comb-like shape including the transparent electrodes each elongated in the X-axis direction on the first substrate included in the parallax barrier. In addition, like the above configuration, the counter electrode including the transparent electrode in the solid pattern in a plan view is provided on the second substrate.

EXPLANATION OF SYMBOLS

10: liquid crystal display device (display device), 11: liquid crystal panel (display panel), 11a: CF substrate (substrate), 11b: array substrate (substrate), 11f: light blocking section, 12: parallax barrier, 12a: first substrate (substrate), 12b: second substrate (substrate), 12d: transparent electrode, 12e: transparent electrode, 13: backlight unit (lighting device), A: width of a pixel (dimension of a pixel measured in the arrangement direction), As: width of a sub pixel (dimension of a sub pixel measured in the arrangement direction), B: width of a light blocking section (dimension of a light blocking section measured in the arrangement direction), BA: barrier section, BO: barrier opening, DA: disclination area, K: constant, PX: pixel, PXs: sub pixel, Wb: width of a barrier section (dimension of a barrier section measured in the arrangement direction), Wc: space (space between transparent electrodes), Wd: width of a barrier section (dimension of a barrier section measured in the arrangement direction), Wo: width of a barrier opening (dimension of a barrier opening measured in the arrangement direction)

**Claims**

1.   A display device (10) comprising:

**EP 2 629 135 B1**

a display panel (11) including a plurality of pixels (PX, LPX, RPX) and light blocking sections (11F), the pixels being arranged linearly in at least one direction, each light blocking section (11F) being arranged between two adjacent pixels and configured to block light; and
a parallax barrier (12) facing the display panel to separate an image displayed on the pixels (PX) by parallax, the parallax barrier including:

barrier sections (BA) arranged in an arrangement direction in which the pixels are arranged, the barrier sections being configured to block light; and
barrier openings each (BO) arranged between two adjacent barrier sections (BA) allowing light to pass therethrough, wherein each barrier section (BA) has a dimension (wb), measured in the arrangement direction, satisfying Expression (1):

$$A - 6 \leq Wb \leq A + B / 2 \qquad (1)$$

where

Wb ($\mu$m) is the dimension of each barrier section (BA);
A ($\mu$m) is a dimension of each pixel (RX) measured in the arrangement direction; and
B ($\mu$m) is a dimension of each light blocking section (11F) measured in the arrangement direction.

2. The display device according to claim 1, wherein each of the barrier sections has the dimension that satisfies Expression (2):

[Mathematical expression 2]

$$Wb \leq A \qquad (2).$$

3. The display device according to one of claims 1 and 2, wherein each of the barrier sections has the dimension that satisfies Expression (3):

[Mathematical expression 3]

$$Wb = A - 2 \qquad (3).$$

4. The display device according to one of claims 1 and 2, wherein each of the barrier sections has the dimension that satisfies Expression (4):

[Mathematical expression 4]

$$Wb = A - 6 \qquad (4).$$

5. The display device according to one of claims 1 and 2, wherein each of the barrier sections has the dimension that satisfies Expression (5):

[Mathematical expression 5]

$$Wb = A \qquad (5).$$

19

6. The display device according to claim 1, wherein each of the barrier sections has the dimension that satisfies Expression (6):

[Mathematical expression 6]

$$Wb = A + B / 2 \qquad (6).$$

7. The display device according to any one of claims 1 to 6, wherein each of the barrier openings has a dimension measured in the arrangement direction, and the dimension of each of the barrier sections and the dimension of each of the barrier openings satisfy Expression (7):

[Mathematical expression 7]

$$K = Wb + Wo \qquad (7)$$

where

Wo ($\mu$m) is the dimension of each of the barrier openings; and
K is a constant.

8. The display device according to claim 7, wherein the dimension of each of the barrier sections and the dimension of each of the barrier openings satisfy Expression (8):

[Mathematical expression 8]

$$Wb + Wo = 2A + 2B \qquad (8).$$

9. The display device according to any one of claims 1 to 8, wherein
each of the pixels includes sub pixels arranged in the arrangement direction, the light blocking sections each being arranged between adjacent two of the sub pixels, and
each of the pixels has the dimension that satisfies Expression (9):

[Mathematical expression 9]

$$A = nAs + (n-1)B \qquad (9)$$

where

As ($\mu$m) is a dimension of each of the sub pixels measured in the arrangement direction;
n is a number of the sub pixels included in each of the pixels, n being a positive integer of two or more; and
B is the dimension of each of the light blocking sections arranged between the sub pixels.

10. The display device according to any one of claims 1 to 9, wherein the parallax barrier includes two substrates facing each other and liquid crystals sealed between the substrates.

11. The display device according to claim 10, further includes transparent electrodes arranged in the arrangement direction on at least one of the substrates, the transparent electrodes each having a strip-like shape, wherein light transmission of the liquid crystals is controlled by a voltage applied to the transparent electrodes, thereby selectively providing the barrier section in the parallax barrier.

**12.** The display device according to claim 11, wherein
the pixels are arranged in the display panel in a matrix,
the transparent electrodes are arranged on each of the substrates included in the parallax barrier, the transparent electrodes on one of the substrates and the transparent electrodes on the other one of the substrates being arranged perpendicular to each other, and
the barrier section has the dimension Wb that is obtained by at least adding a width of one of the transparent electrodes and a space between adjacent two of the transparent electrodes.

**13.** The display device according to claim 12, wherein
the parallax barrier includes at least one disclination area overlapping with an end portion of at least one of the transparent electrodes, the disclination area allowing a disclination to occur in the liquid crystals, and
each of the barrier section has the width obtained by adding the width of one of the transparent electrodes, the space between the transparent electrodes, and a width of the disclination area.

**14.** The display device according to any one of claims 1 to 13, wherein the parallax barrier is provided on a display surface side of the display panel.

**15.** The display device according to any one of claims 1 to 14, wherein the display panel includes two substrates facing each other and liquid crystals sealed between the substrates.

**Patentansprüche**

**1.** Anzeigevorrichtung (10) mit:

einer Anzeigetafel (11) umfassend eine Mehrzahl von Pixeln (PX, LPX, RPX) und Lichtblockierabschnitte (11 F), wobei die Pixel in mindestens einer Richtung linear angeordnet sind, wobei jeder Lichtblockierabschnitt (11F) zwischen zwei benachbarten Pixeln angeordnet und ausgerichtet ist, Licht zu blockieren; und
einer Parallaxenbarriere (12), die der Anzeigetafel gegenüberliegt, um ein auf den Pixeln (PX) angezeigtes Bild durch Parallaxe zu trennen, wobei die Parallaxenbarriere umfasst:

Barriereabschnitte (BA), die in einer Anordnungsrichtung angeordnet sind, in der die Pixel angeordnet sind, wobei die Barriereabschnitte ausgebildet sind, um Licht zu blockieren; und
Barriereöffnungen (BO), wobei jede der Barriereöffnungen (BO) zwischen zwei benachbarten Barriereabschnitten (BA) angeordnet ist und ein Passieren von Licht dort hindurch erlauben, wobei jeder Barriereabschnitt (BA) eine Abmessung (wb) aufweist, die in der Anordnungsrichtung gemessen wird und die Beziehung (1) erfüllt:

$$A - 6 \leq Wb \leq A + B / 2 \qquad (1)$$

wobei

Wb ($\mu$m) die Abmessung jedes Barriereabschnitts (BA) ist;
A ($\mu$m) eine Abmessung jedes in der Anordnungsrichtung gemessenen Pixels (RX) ist; und
B ($\mu$m) eine Abmessung jedes in der Anordnungsrichtung gemessenen Lichtblockierabschnitts (11 F) ist.

**2.** Anzeigevorrichtung nach Anspruch 1, wobei jeder der Barriereabschnitte die Abmessung aufweist, die die Beziehung (2) erfüllt:

(mathematische Beziehung 2)

$$Wb \leq A \qquad (2).$$

**3.** Anzeigevorrichtung nach einem der Ansprüche 1 und 2, wobei jeder der Barriereabschnitte die Abmessung aufweist, die die Beziehung (3) erfüllt:

(mathematische Beziehung 3)

$$Wb = A - 2 \quad (3).$$

4. Anzeigevorrichtung nach einem der Ansprüche 1 und 2, wobei jeder der Barriereabschnitte die Abmessung aufweist, die die Beziehung (4) erfüllt:

(mathematische Beziehung 4)

$$Wb = A - 6 \quad (4).$$

5. Anzeigevorrichtung nach einem der Ansprüche 1 und 2, wobei jeder der Barriereabschnitte die Abmessung aufweist, die die Beziehung (5) erfüllt:

(mathematische Beziehung 5)

$$Wb = A \quad (5).$$

6. Anzeigevorrichtung nach Anspruch 1, wobei jeder der Barriereabschnitte die Abmessung aufweist, die die Beziehung (6) erfüllt:

(mathematische Beziehung 6)

$$Wb = A + B / 2 \quad (6).$$

7. Anzeigevorrichtung nach einem der Ansprüche 1 bis 6, wobei jede der Barriereöffnungen eine Abmessung aufweist, die in der Anordnungsrichtung gemessen wird, und die Abmessung jeder der Barriereabschnitte und die Abmessung jeder der Barriereöffnungen die Beziehung (7) erfüllt:

(mathematische Beziehung 7)

$$K = Wb + Wo \quad (7)$$

wobei

Wo ($\mu$m) die Abmessung jeder der Barriereöffnungen ist; und
K eine Konstante ist.

8. Anzeigevorrichtung nach Anspruch 7, wobei die Abmessung jeder der Barriereabschnitte und die Abmessung jeder der Barriereöffnungen die Beziehung (8) erfüllt:

(mathematische Beziehung 8)

$$Wb + Wo = 2A + 2B \quad (8).$$

9. Anzeigevorrichtung nach einem der Ansprüche 1 bis 8, wobei jedes der Pixel Teilpixel umfasst, die in der Anordnungsrichtung angeordnet sind, wobei die Lichtblockierabschnitte jeweils zwischen zwei benachbarten der Teilpixel angeordnet sind, und
jedes der Pixel die Abmessung aufweist, die die Beziehung (9) erfüllt:

(mathematische Beziehung 9)

$$A = nAs + (n-1)B \quad (9)$$

wobei

As ($\mu$m) eine Abmessung jedes der in der Anordnungsrichtung gemessenen Teilpixel ist;
n eine Anzahl der in jedem der Pixel enthaltenen Teilpixel ist, wobei n eine positive ganze Zahl von zwei oder mehr ist, und
B die Abmessung jedes der zwischen den Teilpixeln angeordneten Lichtblockierabschnitte ist.

10. Anzeigevorrichtung nach einem der Ansprüche 1 bis 9, wobei die Parallaxenbarriere zwei einander gegenüberliegende Substrate und zwischen den Substraten eingeschlossene Flüssigkristalle umfasst.

11. Anzeigevorrichtung nach Anspruch 10, die des Weiteren transparente Elektroden, die in der Anordnungsrichtung auf mindestens einem der Substrate angeordnet sind, umfasst, wobei die transparenten Elektroden jeweils eine streifenartige Form aufweist, wobei
Lichttransmission der Flüssigkristalle gesteuert wird durch eine an die transparenten Elektroden angelegt Spannung, wodurch der Barriereabschnitt wahlweise in der Parallaxenbarriere bereitgestellt wird.

12. Anzeigevorrichtung nach Anspruch 11, wobei
die Pixel in der Anzeigetafel in einer Matrix angeordnet sind,
die transparenten Elektroden auf jedem der in der Parallaxenbarriere enthaltenen Substrate angeordnet sind, wobei die transparenten Elektroden auf einem der Substrate und die transparenten Elektroden auf dem anderen der Substrate zueinander senkrecht angeordnet sind und
der Barriereabschnitt die Abmessung Wb hat, die erhalten wird durch Addieren mindestens einer Breite einer der transparenten Elektroden und einem Abstand zwischen den benachbarten zwei der transparenten Elektroden.

13. Anzeigevorrichtung nach Anspruch 12, wobei
die Parallaxenbarriere mindestens ein Disklinationsgebiet umfasst, das mit einem Endbereich von mindestens einer der transparenten Elektroden überlappt, wobei das Disklinationsgebiet das Auftreten einer Disklination in den Flüssigkristallen ermöglicht, und
jeder der Barriereabschnitte die Breite hat, die erhalten wird durch addieren der Breite einer der transparenten Elektroden, des Abstands zwischen den transparenten Elektroden und einer Breite des Disklinationsgebiets.

14. Anzeigevorrichtung nach einem der Ansprüche 1 bis 13, wobei die Parallaxenbarriere auf einer Seite der Anzeigevorrichtung der Anzeigetafel vorgesehen ist.

15. Anzeigevorrichtung nach einem der Ansprüche 1 bis 14, wobei die Anzeigevorrichtung zwei einander gegenüberliegende Substrate und zwischen den Substraten eingeschlossene Flüssigkristalle umfasst.

**Revendications**

1. Dispositif d'affichage (10) comprenant :

un panneau d'affichage (11) qui comporte une multiplicité de pixels (PX, LPX, RPX) et de sections de blocage de lumière (11F), les pixels étant disposés linéairement dans au moins une direction, chaque section de blocage de lumière (11F) étant disposée entre deux pixels voisins et conçue pour bloquer la lumière ; et
une barrière de parallaxe (12) qui fait face au panneau d'affichage pour séparer une image affichée sur les pixels (PX) par parallaxe, la barrière de parallaxe comportant :

des sections de barrière (BA) qui sont disposées dans une direction de disposition dans laquelle les pixels sont disposés, lesdites sections de barrière étant conçues pour bloquer la lumière ; et
des ouvertures de barrière (BO) qui sont disposées chacune entre deux sections de barrière (BA) voisines et qui permettent de laisser passer la lumière, étant précisé que chaque section de barrière (BA) présente une dimension (wb), mesurée dans la direction de disposition, qui satisfait à l'Expression (1) :

$$A - 6 \leq Wb \leq A + B / 2 \qquad (1)$$

dans laquelle
Wb ($\mu$m) désigne la dimension de chaque section de barrière (BA) ;
A ($\mu$m) désigne une dimension de chaque pixel (RX), mesurée dans la direction de disposition ; et
B ($\mu$m) désigne une dimension de chaque section de blocage de lumière (11F), mesurée dans la direction de disposition.

**2.** Dispositif d'affichage selon la revendication 1, étant précisé que chacune des sections de barrière présente la dimension qui satisfait à l'Expression (2) :

[Expression mathématique 2]

$$Wb \leq A \qquad (2).$$

**3.** Dispositif d'affichage selon l'une des revendications 1 et 2, étant précisé que chacune des sections de barrière présente la dimension qui satisfait à l'Expression (3) :

[Expression mathématique 3]

$$Wb = A - 2 \qquad (3).$$

**4.** Dispositif d'affichage selon l'une des revendications 1 et 2, étant précisé que chacune des sections de barrière présente la dimension qui satisfait à l'Expression (4) :

[Expression mathématique 4]

$$Wb = A - 6 \qquad (4).$$

**5.** Dispositif d'affichage selon l'une des revendications 1 et 2, étant précisé que chacune des sections de barrière présente la dimension qui satisfait à l'Expression (5) :

[Expression mathématique 5]

$$Wb = A \qquad (5).$$

**6.** Dispositif d'affichage selon la revendication 1, étant précisé que chacune des sections de barrière présente la dimension qui satisfait à l'Expression (6) :

[Expression mathématique 6]

$$Wb = A + B / 2 \qquad (6).$$

**7.** Dispositif d'affichage selon l'une quelconque des revendications 1 à 6, étant précisé que chacune des ouvertures de barrière présente une dimension mesurée dans la direction de disposition, et que la dimension de chacune des sections de barrière et la dimension de chacune des ouvertures de barrière satisfont à l'Expression (7) :

[Expression mathématique 7]

$$K = Wb + Wo \qquad\qquad (7)$$

dans laquelle

Wo ($\mu$m) désigne la dimension de chacune des ouvertures de barrière ; et
K est une constante.

8. Dispositif d'affichage selon la revendication 7, étant précisé que la dimension de chacune des sections de barrière et la dimension de chacune des ouvertures de barrière satisfont à l'Expression (8) :

[Expression mathématique 8]

$$Wb + Wo = 2A + 2B \qquad\qquad (8).$$

9. Dispositif d'affichage selon l'une quelconque des revendications 1 à 8, étant précisé
que chacun des pixels comprend des sous-pixels disposés dans la direction de disposition, les sections de blocage de lumière étant disposées chacune entre deux sous-pixels voisins, et
que chacun des pixels présente la dimension qui satisfait à l'Expression (9) :

[Expression mathématique 9]

$$A = nAs + (n-1)B \qquad\qquad (9)$$

dans laquelle

As ($\mu$m) désigne une dimension de chacun des sous-pixels, mesurée dans la direction de disposition ;
n désigne un nombre de sous-pixels compris dans chacun des pixels, n étant un nombre entier positif égal à deux ou plus ; et
B désigne la dimension de chacune des sections de blocage de lumière disposées entre les sous-pixels.

10. Dispositif d'affichage selon l'une quelconque des revendications 1 à 9, étant précisé que la barrière de parallaxe comprend deux substrats qui se font face, et des cristaux liquides enfermés de manière étanche entre les substrats.

11. Dispositif d'affichage selon la revendication 10, qui comprend également des électrodes transparentes disposées dans la direction de disposition sur l'un au moins des substrats, les électrodes transparentes présentant chacune la forme d'une bande, étant précisé
que la transmission de lumière des cristaux liquides est commandée par une tension appliquée aux électrodes transparentes, ce qui forme sélectivement la section de barrière dans la barrière de parallaxe.

12. Dispositif d'affichage selon la revendication 11, étant précisé
que les pixels sont disposés dans le panneau d'affichage dans une matrice,
que les électrodes transparentes sont disposées sur chacun des substrats contenus dans la barrière de parallaxe, les électrodes transparentes prévues sur l'un des substrats et les électrodes transparentes prévues sur l'autre substrat étant disposées perpendiculairement les unes par rapport aux autres, et
que la section de barrière présente la dimension Wb qui est obtenue au moins en ajoutant une largeur de l'une des électrodes transparentes et un espace entre deux électrodes transparentes voisines.

13. Dispositif d'affichage selon la revendication 12, étant précisé
que la barrière de parallaxe comprend au moins une zone de désinclinaison qui recouvre une partie d'extrémité de l'une au moins des électrodes transparentes, la zone de désinclinaison permettant qu'une désinclinaison se produise dans les cristaux liquides, et

que chacune des sections de barrière présente la largeur obtenue en ajoutant la largeur de l'une des électrodes transparentes, l'espace entre les électrodes transparentes et une largeur de la zone de désinclinaison.

14. Dispositif d'affichage selon l'une quelconque des revendications 1 à 13, étant précisé que la barrière de parallaxe est formée sur un côté de surface d'affichage du panneau d'affichage.

15. Dispositif d'affichage selon l'une quelconque des revendications 1 à 14, étant précisé que le panneau d'affichage comprend deux substrats qui se font face, et des cristaux liquides enfermés de manière étanche entre les substrats.

FIG.1

# FIG.2

# FIG.3

## FIG.4

As B As B As B As B As B As B As B As B As B As B As B As B

Y ↑
└─→ X

# FIG.5

# FIG.6

12e
(E4)

12e
(E4)

12e
(E3)

12e
(E3)

X

Y

12b

## FIG.7

PORTRAIT (VERTICAL) ORIENTATION

SECOND ELECTRODE E2, THIRD ELECTRODE E3, FOURTH ELECTRODE E4

FIRST ELECTRODE E1

LANDSCAPE (HORIZONTAL) ORIENTATION

FIRST ELECTRODE E1, SECOND ELECTRODE E2, FOURTH ELECTRODE E4

THIRD ELECTRODE E3

1/90sec

1/180sec   1/180sec

## FIG.8

FIG.9

EP 2 629 135 B1

FIG.10

EP 2 629 135 B1

# FIG.11

FIG.12

FIG.13

FIG.14

| CA VALUE | 0~10 | 10~20 | 20~40 | 40< |
|---|---|---|---|---|
| DISPLAY QUALITY | EXCELLENT | GOOD | NOT GOOD | POOR |

## FIG.15

## FIG.16

# FIG.17

# FIG.18

# FIG.19

## FIG.20

**EP 2 629 135 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009139947 A

- JP 8331605 A